(19) Europäisches Patentamt / European Patent Office / Office européen des brevets

(11) **EP 4 391 623 A1**

(12) **EUROPEAN PATENT APPLICATION**
published in accordance with Art. 153(4) EPC

(43) Date of publication:
**26.06.2024 Bulletin 2024/26**

(21) Application number: **22858465.2**

(22) Date of filing: **16.08.2022**

(51) International Patent Classification (IPC):
*H04W 16/28* (2009.01)  *H04L 27/26* (2006.01)
*H04W 76/15* (2018.01)  *H04W 52/18* (2009.01)

(52) Cooperative Patent Classification (CPC):
**H04L 27/26; H04W 16/28; H04W 52/18;**
**H04W 76/15**

(86) International application number:
**PCT/JP2022/030939**

(87) International publication number:
**WO 2023/022147 (23.02.2023 Gazette 2023/08)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **17.08.2021 JP 2021132997**

(71) Applicant: **NTT DOCOMO, INC.**
**Tokyo 100-6150 (JP)**

(72) Inventors:
• **MATSUMURA, Yuki**
  **Tokyo 100-6150 (JP)**
• **NAGATA, Satoshi**
  **Tokyo 100-6150 (JP)**

(74) Representative: **Hoffmann Eitle**
**Patent- und Rechtsanwälte PartmbB**
**Arabellastraße 30**
**81925 München (DE)**

(54) **TERMINAL, RADIO COMMUNICATION METHOD AND BASE STATION**

(57) A terminal according to an aspect of the present disclosure includes: a receiving section that receive first information regarding a list of transmission configuration indication (TCI) states including a plurality of TCI states applicable to at least one of a plurality of types of channels and signals, second information including a plurality of sets of a plurality of transmission power control parameters, and third information regarding path loss reference signal candidates; and a control section that determines a transmission power control parameter and a path loss reference signal in a serving cell or a bandwidth part in which the first information is not configured on the basis of the first information, the second information, and the third information, in which the TCI state included in the first information and the set of transmission power control parameters included in the second information are associated with each other, and the TCI state included in the first information and the path loss reference signal included in the third information are associated with each other. According to an aspect of the present disclosure, it is possible to appropriately perform transmission power control in a case where a TCI state applicable to a plurality of types of channels/signals is applied.

FIG. 10

**Description**

Technical Field

The present disclosure relates to a terminal, a radio communication method, and a base station in next-generation mobile communication systems.

Background Art

In a universal mobile telecommunications system (UMTS) network, specifications of long term evolution (LTE) have been drafted for the purpose of further increasing data rates, providing low delay, and the like (Non Patent Literature 1). In addition, the specifications of LTE-Advanced (3GPP releases (Rels.) 10 to 14) have been drafted for the purpose of further increasing capacity and advancement of LTE (third generation partnership project (3GPP) Rels. 8 and 9).

Successor systems to LTE (for example, also referred to as 5th generation mobile communication system (5G), 5G+(plus), 6th generation mobile communication system (6G), New Radio (NR), or 3GPP Rel. 15 and subsequent releases) are also being studied.

Citation List

Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

Summary of Invention

Technical Problem

In a future radio communication system (for example, NR), it has been studied that a user terminal (terminal, user equipment (UE)) controls transmission/reception processing on the basis of information regarding quasi-co-location (QCL) (QCL assumption/transmission configuration indication (TCI) state/spatial relation).

Applying a configured/activated/indicated TCI state to a plurality of types of signals (channels/RSs) has been studied. However, studies on transmission power control of an uplink (UL) channel/signal in application of the TCI state are not sufficient. When the transmission power control is not sufficiently studied, a decrease in communication quality, a decrease in throughput, or the like may be caused.

Therefore, an object of the present disclosure is to provide a terminal, a radio communication method, and a base station that appropriately perform transmission power control in a case where a TCI state applicable to a plurality of types of channels/signals is applied.

Solution to Problem

A terminal according to an aspect of the present disclosure includes: a receiving section that receive first information regarding a list of transmission configuration indication (TCI) states including a plurality of TCI states applicable to at least one of a plurality of types of channels and signals, second information including a plurality of sets of a plurality of transmission power control parameters, and third information regarding path loss reference signal candidates; and a control section that determines a transmission power control parameter and a path loss reference signal in a serving cell or a bandwidth part in which the first information is not configured on the basis of the first information, the second information, and the third information, in which the TCI state included in the first information and the set of transmission power control parameters included in the second information are associated with each other, and the TCI state included in the first information and the path loss reference signal included in the third information are associated with each other.

Advantageous Effects of Invention

According to an aspect of the present disclosure, it is possible to appropriately perform transmission power control in a case where a TCI state applicable to a plurality of types of channels/signals is applied.

Brief Description of Drawings

Fig. 1 is a diagram illustrating an example of an RRC information element regarding transmission power control of a PUSCH of Rel. 16.

Fig. 2 is a diagram illustrating an example of an RRC information element regarding open loop power control of Rel. 16.

Fig. 3 is a diagram illustrating an example of an RRC information element of transmission power control of a PUCCH of Rel. 16.

Fig. 4 is a diagram illustrating an example of an RRC information element of transmission power control of an SRS of Rel. 16.

Fig. 5 is a diagram illustrating an example of simultaneous beam update across a plurality of CCs.

Figs. 6A and 6B are diagrams illustrating an example of a common beam.

Fig. 7 is a diagram illustrating an example of a configurable QCL configuration.

Fig. 8 is a diagram illustrating an example of a non-configurable QCL configuration.

Figs. 9A and 9B are diagrams illustrating an example of a method of configuring a TCI state list for BWPs/CCs.

Fig. 10 is a diagram illustrating an example of parameter association according to Embodiment 1-1.

Fig. 11 is a diagram illustrating an example of configuration of PL-RS according to Embodiment 1-2-1.

Fig. 12 is a diagram illustrating an example of configuration of PL-RS according to Embodiment 1-2-2.

Fig. 13 is a diagram illustrating an example of determination of PL-RS according to a second embodiment.

Fig. 14 is a diagram illustrating an example of a schematic configuration of a radio communication system according to one embodiment.

Fig. 15 is a diagram illustrating an example of a configuration of a base station according to one embodiment.

Fig. 16 is a diagram illustrating an example of a configuration of a user terminal according to one embodiment.

Fig. 17 is a diagram illustrating an example of a hardware configuration of the base station and the user terminal according to one embodiment.

Description of Embodiments

(TCI, Spatial Relation, and QCL)

In NR, it has been studied to control reception processing (for example, at least one of reception, demapping, demodulation, and decoding) and transmission processing (for example, at least one of transmission, mapping, precoding, modulation, and coding) in UE of at least one of a signal and a channel (expressed as a signal/channel) on the basis of a transmission configuration indication state (TCI state).

The TCI state may represent what is applied to a downlink signal/channel. Those corresponding to the TCI state applied to an uplink signal/channel may be expressed as a spatial relation.

The TCI state is information regarding a quasi-co-location (QCL) of the signal/channel, and may also be referred to as, for example, a spatial Rx parameter, spatial relation information, or the like. The TCI state may be configured in the UE for each channel or each signal.

The QCL is an indicator indicating a statistical property of a signal/channel. For example, when one signal/channel and another signal/channel have a QCL relation may mean that it is possible to assume that at least one of Doppler shift, Doppler spread, an average delay, a delay spread, and a spatial parameter (for example, a spatial Rx parameter) is identical (in QCL with respect to at least one of these) between the plurality of different signals/channels.

Note that the spatial Rx parameter may correspond to a reception beam of the UE (for example, a reception analog beam), and the beam may be specified on the basis of spatial QCL. The QCL (or at least one element of the QCL) in the present disclosure may be replaced with spatial QCL (sQCL).

A plurality of types of QCL (QCL types) may be defined. For example, four QCL types A to D with different parameters (or parameter sets) that can be assumed to be identical may be provided. These parameters (which may be referred to as QCL parameters) are as follows:

- QCL type A (QCL-A): Doppler shift, Doppler spread, average delay, and delay spread;
- QCL type B (QCL-B): Doppler shift and Doppler spread;
- QCL type C (QCL-C): Doppler shift and average delay; and
- QCL type D (QCL-D): spatial Rx parameter.

It may be referred to as a QCL assumption for the UE to assume that a certain control resource set (CORESET), channel, or reference signal has a specific QCL (for example, QCL type D) relation with another CORESET, channel, or reference signal.

The UE may determine at least one of a transmission beam (Tx beam) and a reception beam (Rx beam) of a signal/channel on the basis of the TCI state of the signal/channel or the QCL assumption.

The TCI state may be, for example, information regarding the QCL of a target channel (in other words, a reference signal (RS) for the channel) and another signal (for example, another RS). The TCI state may be configured (indicated) by higher layer signaling, physical layer signaling, or a combination thereof.

The physical layer signaling may be, for example, downlink control information (DCI).

A channel for which a TCI state or spatial relation is configured (specified) may be, for example, at least one of a physical downlink shared channel (PDSCH), a physical downlink control channel (PDCCH), a physical uplink shared channel (PUSCH), and a physical uplink control channel (PUCCH).

In addition, an RS having a QCL relation with the channel may be, for example, at least one of a synchronization signal block (SSB), a channel state information reference signal (CSI-RS)), a sounding reference signal (SRS), a tracking CSI-RS (also referred to as a tracking reference signal (TRS)), and a QCL detection reference signal (also referred to as a QRS).

The SSB is a signal block including at least one of a primary synchronization signal (PSS), a secondary synchronization signal (SSS), and a broadcast channel (physical broadcast channel (PBCH)). The SSB may be referred to as an SS/PBCH block.

An RS of QCL type X in a TCI state may mean an RS in a QCL type X relation with (DMRS of) a certain channel/signal, and this RS may be referred to as a QCL source of QCL type X in the TCI state.

A QCL type A RS is always configured for the PDCCH and the PDSCH, and a QCL type D RS may be additionally configured. Since it is difficult to estimate a Doppler shift, a delay, and the like by receiving a one-shot DMRS, a QCL type A RS is used to improve channel estimation accuracy. A QCL type D RS is used for reception beam determination at the time of DMRS reception.

For example, TRSs 1-1, 1-2, 1-3, and 1-4 are transmitted, and a notification of TRS 1-1 is given as a QCL type C/D RS by the TCI state of the PDSCH. By being notified of the TCI state, the UE can use the information obtained from the results of the past periodic reception/measurement of TRS 1-1 for reception/channel estimation of a PDSCH DMRS. In this case, the QCL source of the PDSCH is TRS 1-1, and a QCL target is the PDSCH DMRS.

(Transmission Power Control)

<Transmission Power Control for PUSCH>

In NR, transmission power of the PUSCH is controlled on the basis of a TPC command (also referred to as value, increase/decrease value, correction value, or the like) indicated by a value of a predetermined field (also referred to as transmission power control (TPC) command field or the like) in the DCI.

For example, when the UE transmits the PUSCH on an active UL BWP b of a carrier f of a serving cell c using a parameter set (open loop parameter set) having an index j and an index 1 of a power control adjustment state, transmission power ($P_{\text{PUSCH, b,f,c}}(i,j,q_d,l)$) of the PUSCH in a PUSCH transmission occasion (also referred to as transmission period or the like) i may be represented by Formula (1) described below.

Here, the power control adjustment state may be configured by the higher layer parameter whether it has a plurality of states (for example, two states) or a single state. In addition, when a plurality of power control adjustment states is configured, one of the plurality of power control adjustment states may be identified by the index 1 (for example, $l \in \{0,1\}$). The power control adjustment state may be referred to as a PUSCH power control adjustment state, a first or second state, or the like. In the present disclosure, the index 1 may be referred to as closed loop index.

In addition, the PUSCH transmission occasion i is a predetermined period during which the PUSCH is transmitted, and may include, for example, one or more symbols, one or more slots, and the like.

[Math. 1]

(Formula 1)

$$P_{\text{PUSCH},b,f,c}(i,j,q_d,l) =$$

$$min\begin{Bmatrix} P_{\text{CMAX},f,c}(i), \\ P_{\text{O\_PUSCH},b,f,c}(j) + 10\log_{10}\left(2^{\mu} \cdot M_{\text{RB},b,f,c}^{\text{PUSCH}}(i)\right) + \alpha_{b,f,c}(j) \cdot PL_{b,f,c}(q_d) + \Delta_{\text{TF},b,f,c}(i) + f_{b,f,c}(i,l) \end{Bmatrix}$$

In Formula (1), $P_{\text{CMAX,f,c}}(i)$ is, for example, transmission power (also referred to as maximum transmission power, UE maximum output power, or the like) of a user terminal configured for the carrier f of the serving cell c in the transmission occasion i. $P_{O\_PUSCH,b,f,c}(j)$ is, for example, a parameter (for example, also referred to as parameter concerning a transmission power offset, transmission power offset P0, target received power parameter, or the like) related to target received power configured for the active UL BWP b of the carrier f of the serving cell c in a parameter set configuration j.

$M^{PUSCH}_{RB,b,f,c}(i)$ is, for example, the number of resource blocks (bandwidth) allocated to the PUSCH for the transmission occasion i in the active UL BWP b of the carrier f with the serving cell c and a subcarrier spacing μ. $\alpha_{b,f,c}(j)$ is a value (for example, also referred to as msg3-Alpha, p0-PUSCH-Alpha, a fractional factor, or the like) provided by a higher layer parameter.

$PL_{b,f,c}(q_d)$ is, for example, a path loss (path loss compensation) calculated by the user terminal by using index $q_d$ of a reference signal (a path loss (PL) reference RS, a PL-RS, a DL RS for path loss measurement, or PUSCH-PathlossReferenceRS) for a downlink BWP associated with the active UL BWP b of the carrier f of the serving cell c.

$\Delta_{TF,b,f,c}(i)$ is a transmission power adjustment component (offset, transmission format compensation) for the UL BWP b of the carrier f of the serving cell c.

$f_{b,f,c}(i,l)$ is a value (for example, the power control adjustment state, the cumulative value of the TPC command, the closed-loop value) based on the TPC command of the power control adjustment state index 1 of the active UL BWP of the carrier f of the serving cell c and the transmission occasion i. For example, $f_{b,f,c}(i,l)$ may be represented by Formula (2). 1 may be referred to as closed loop index.

[Math. 2]

$$\text{(Formula 2)}$$

$$f_{b,f,c}(i,l) = f_{b,f,c}(i-i_0,l) + \sum_{m=0}^{C(D_i)-1} \delta_{PUSCH,b,f,c}(m,l)$$

In Formula (2), $\delta_{PUSCH,b,f,c}(m,l)$ is a TPC command value in a PUSCH transmission occasion m. $\sum_{m=0}^{C(D\_i)-1}\delta_{PUSCH,b,f,c}(m,l)$ is a sum of TPC command values in the set of TPC command values of a group $C(D_i)$ between a $K_{PUSCH}(i-i_0)-1$ symbol before a transmission occasion i-$i_0$ of the PUSCH and a $K_{PUSCH}(i)$ symbol before a transmission occasion i of the PUSCH. Here, io is an integer of 1 or more. The TPC command value in a transmission occasion of a certain PUSCH may be, for example, a TPC command indicated by a TPC command field value in the DCI (for example, DCI format 1_0 or 1_1) detected in the active UL BWP b of the carrier f of the serving cell c or a TPC command indicated by a TPC command field value in the DCI (for example, DCI format 2_2) that has CRC parity bits to be scrambled by a specific radio network temporary identifier (RNTI) (for example, TPC-PUSCH-RNTI) (that is to be CRC scrambled).

When the UE is not provided with a path loss reference RS (for example, PUSCH-PathlossReferenceRS) or when the UE is not provided with individual higher layer parameters, the UE may calculate $PL_{b,f,c}(q_d)$ using RS resources from a SSB used to obtain a master information block (MIB).

If the UE is configured with a number of RS resource indices up to a value of a maximum number of path loss reference RSs (for example, maxNrofPUSCH-PathlossReferenceRS) and a respective set of RS configurations for the RS resource indices by way of the path loss reference RSs, the set of RS resource indices may include one or both of a set of SS/PBCH block indices and a set of CSI-RS resource indices. The UE may identify an RS resource index $q_d$ in the set of RS resource indices.

When the PUSCH transmission is scheduled by a random access response (RAR) UL grant, the UE may use the same RS resource index $q_d$ as for the corresponding PRACH transmission.

In a case where the UE is provided with a configuration of PUSCH power control by the SRI (for example, SRI-PUSCH-PowerControl) and is provided with one or more path loss reference RS ID values, the UE may obtain mapping between a set of values for the SRI field in DCI format 0_1 and a set of path loss reference RS ID values from higher layer signaling (for example, sri-PUSCH-PowerControl-Id in SRI-PUSCH-PowerControl). The UE may determine an RS resource index $q_d$ from the path loss reference RS IDs mapped to SRI field values in DCI format 0_1 that schedules the PUSCH.

When the PUSCH transmission is scheduled by DCI format 0_0 and the UE is not provided with PUCCH spatial relation information for the PUCCH resource with the lowest index for each carrier f and the active UL BWP b for the serving cell c, the UE may use the same RS resource index $q_d$ as the PUCCH transmission in that PUCCH resource.

When the PUSCH transmission is scheduled by DCI format 0_0 and the UE is not provided with the spatial setting for the PUCCH transmission, or when the PUSCH transmission is scheduled by DCI format 0_1 which does not include the SRI field, or when the configuration of the power control for the PUSCH by the SRI is not provided to the UE, the UE may use the RS resource index $q_d$ with the path loss reference RS ID of zero.

For PUSCH transmission configured by a configuration grant configuration (for example, ConfiguredGrantConfig), when the configuration grant configuration includes a predetermined parameter (for example, rrc-CofiguredUplinkGrant), the RS resource index $q_d$ may be provided to the UE by a path loss reference index (for example, pathlossReferenceIndex) within the predetermined parameter.

For PUSCH transmission configured by the configuration grant configuration, when the configuration grant configuration does not include the predetermined parameter, the UE may determine the RS resource index $q_d$ from the value of the ID of the path loss reference RS mapped to the SRI field in the DCI format that activates the PUSCH transmission. When the DCI format does not include the SRI field, the UE may determine the RS resource index $q_d$ with the path loss reference RS ID of zero.

Note that Formulae (1) and (2) are merely examples and are not limited thereto. It is sufficient if the UE controls the transmission power of the PUSCH on the basis of at least one parameter exemplified in Formulae (1) and (2), and an additional parameter may be included, or some parameters may be omitted. In addition, in Formulae (1) and (2) above, the transmission power of the PUSCH is controlled for each active UL BWP of a certain carrier of a certain serving cell, but it is not limited thereto. At least a part of the serving cell, the carrier, the BWP, and the power control adjustment state may be omitted.

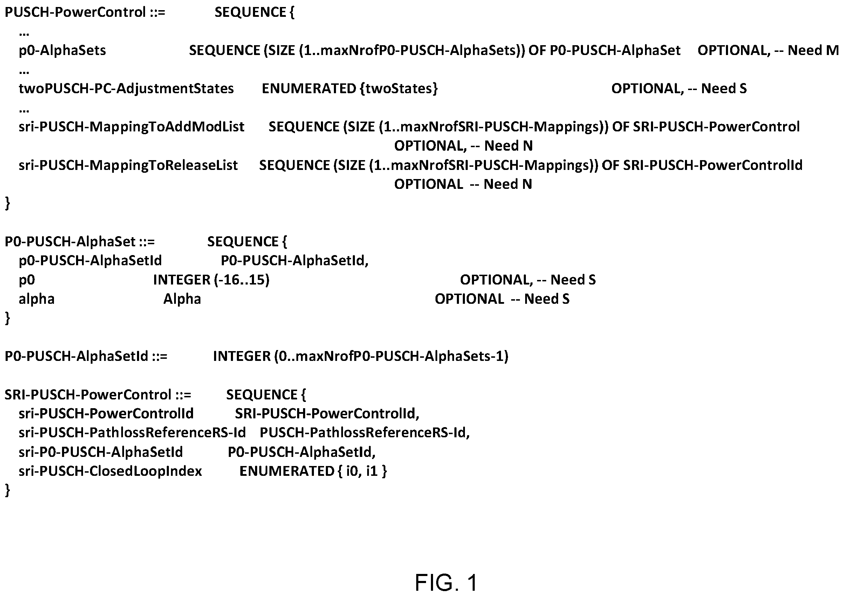

Fig. 1 is a diagram illustrating an example of an RRC information element regarding transmission power control of a PUSCH of Rel. 16. As illustrated in Fig. 1, the UE performs transmission power control of the PUSCH on the basis of an RRC information element (PUSCH-PowerControl) related to transmission power control of the PUSCH. PUSCH-PowerControl is included in the RRC information element for PUSCH configuration (PUSCH-Config).

As illustrated in Fig. 1, PUSCH-PowerControl includes a parameter (p0-AlphaSets) representing a set of parameters for giving at least $P_{O\_PUSCH,b,f,c}(j)$ and $\alpha_{b,f,c}(j)$. p0-AlphaSets includes a parameter (P0-PUSCH-AlphaSet) for giving $P_{O\_PUSCH,b,f,c}(j)$ and $\alpha_{b,f,c}(j)$. That is, in the UE, a plurality of combinations of P0 and $\alpha$ is configured for each PUSCH configuration parameter (PUSCH-Config).

In addition, as illustrated in Fig. 1, P0-PUSCH-AlphaSet includes a parameter (p0-PUSCH-AlphaSetID) indicating the ID of a P0 and $\alpha$ set, a parameter (P0) related to P0, and a parameter (alpha) related to $\alpha$. The UE is configured with a plurality of P0 and $\alpha$ sets on the basis of P0-PUSCH-AlphaSet.

In addition, PUSCH-PowerControl includes a parameter (twoPUSCH-PC-AdjustmentStates) for configuring two transmission power control adjustment states. The UE may determine that two power adjustment states (closed loop power control states) may be configured when twoPUSCH-PC-AdjustmentStates is configured.

In addition, in the example illustrated in Fig. 1, the power control configuration parameter (SRI-PUSCH-PowerControl) mapped to the SRI field value includes at least a configuration parameter (sri-PUSCH-ClosedLoopIndex) of the closed loop index of the PUSCH. The power control configuration parameter (SRI-PUSCH-PowerControl) mapped to the SRI field value is identified by sri-PUSCH-PowerControlID.

The UE determines the value of the closed loop index on the basis of the configuration parameter (sri-PUSCH-ClosedLoopIndex) of the closed loop index of the PUSCH. That is, in the UE, P0, $\alpha$ and the closed loop index are configured for each sri-PUSCH-PowerControlID. Hereinafter, in the present disclosure, the parameter (P0) related to P0, the parameter (alpha) related to $\alpha$, and the configuration parameter of the closed loop index may be simply referred to as P0, $\alpha$, and the CL loop index, respectively.

<Open Loop Transmission Power Control of PUSCH>

In Rel. 16, introduction of open loop power control capable of controlling the value of P0 by the DCI is studied.

In Rel. 16 NR, a case is supported in which the UE is provided with the values of the IDs (p0-PUSCH-AlphaSetId) of P0 and $\alpha$ sets for a plurality of PUSCHs from a configuration (for example, SRI-PUSCH-PowerControl) of power control of the PUSCH by the SRI, and the DCI format for scheduling the PUSCH includes the SRI field. In such a case, the UE obtains a mapping between the set of values of the SRI field in the DCI format from the ID (sri-PUSCH-PowerControlId) of the power control of the PUSCH by the SRI in the configuration of the power control of the PUSCH by the SRI (for example, SRI-PUSCH-PowerControl), and the set of indexes provided from the ID (p0-PUSCH-AlphaSetId) of a P0 and $\alpha$ set for the PUSCH that maps to the set of values of the P0 and $\alpha$ set for the PUSCH (P0-PUSCH-AlphaSet). Next, the UE determines $P_{O\_PUSCH,b,f,c}(j)$ from the value of the ID (p0-PUSCH-AlphaSetId) of the P0 and $\alpha$ set for the PUSCH mapped to the SRI field.

If the DCI format includes the indication field of the open loop power control parameter set and the indication field of the open loop power control parameter set indicates 1, the UE determines $P_{O\_PUSCH,b,f,c}(j)$ from the first value of the P0 set of the PUSCH (p0-PUSCH-Set) with the ID of the P0 set of the PUSCH (p0-PUSCH-SetId) corresponding to the value of the SRI field.

If the P0 set of the PUSCH (P0-PUSCH-Set) is provided to the UE, and the DCI format includes the indication field of the open loop power control parameter set, when the indication field of the open loop power control parameter set indicates 1 or 01, the UE determines $P_{O\_PUSCH,b,f,c}$(j) from the first value of the P0 set (p0-PUSCH-Set) of the PUSCH with the ID (p0-PUSCH-SetId, p0-PUSCH-SetId-r16) of the P0 set of the lowest PUSCH.

If the P0 set of the PUSCH (P0-PUSCH-Set) is provided to the UE, and the DCI format includes the indication field of the open loop power control parameter set, when the indication field of the open loop power control parameter set indicates 10, the UE determines $P_{O\_PUSCH,b,f,c}$(j) from the second value of the P0 set (p0-PUSCH-Set) of the PUSCH with the ID (p0-PUSCH-SetId, p0-PUSCH-SetId-r16) of the P0 set of the lowest PUSCH.

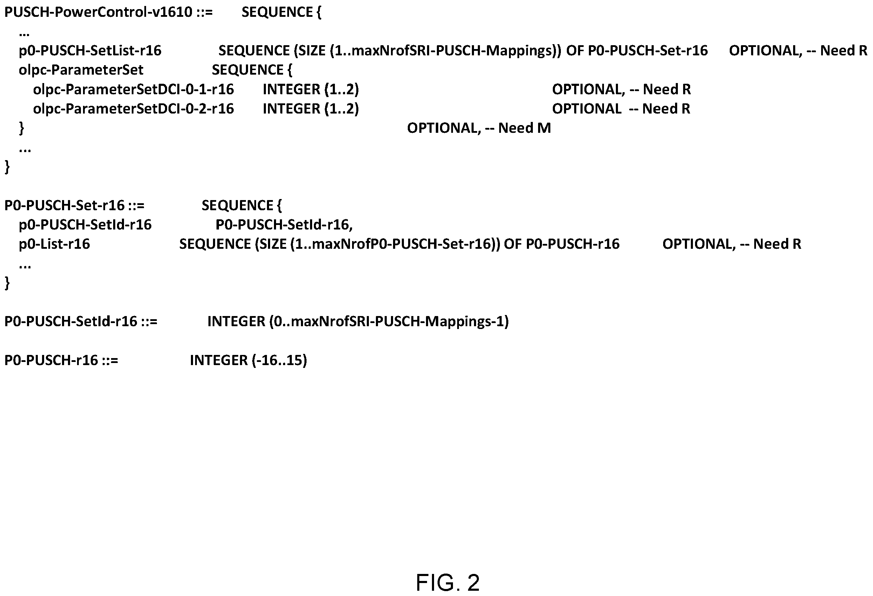

Fig. 2 is a diagram illustrating an example of an RRC information element regarding open loop power control of Rel. 16. In Fig. 2, a parameter (PUSCH-PowerControl-v1610) of the transmission power configuration of the PUSCH included in the RRC information element (PUSCH-Config) for PUSCH configuration is described.

In Fig. 2, the parameter (PUSCH-PowerControl-v1610) of the transmission power configuration of the PUSCH includes information (p0-PUSCH-SetList-r16) related to the P0 set of a plurality of PUSCHs. P0-PUSCH-SetList-r16 is identified by p0-PUSCH-SetId-r16 and includes a list of P0 (p0-List-r16).

As illustrated in Fig. 2, p0-List-r16 is configured for each p0-PUSCH-SetId-r16. Each value of p0-PUSCH-SetId-r16 corresponds to the SRI field.

<PUCCH Transmission Power Control>

In addition, in the NR, the transmission power of the PUCCH is controlled on the basis of a TPC command (also referred to as a value, an increase/decrease value, a correction value, an indication value, and the like) indicated by a value of a predetermined field (also referred to as a TPC command field, a first field, and the like) in the DCI.

For example, using the index 1 of the power control adjustment state, the transmission power ($P_{PUCCH,b,f,c}(i,q_u,q_d,l)$) of the PUCCH in the PUCCH transmission occasion (also referred to as a transmission period or the like) i for the active UL BWP b of the carrier f of the serving cell c may be expressed by Formula (3) below.

The power control adjustment state may be referred to as a PUCCH power control adjustment state, a first or second state, or the like.

In addition, the PUCCH transmission occasion i is a predetermined period during which the PUCCH is transmitted, and may include, for example, one or more symbols and one or more slots.

[Math. 3]

(Formula 3)

$$P_{\text{PUCCH},b,f,c}(i, q_u, q_d, l) =$$

$$min \left\{ \begin{array}{l} P_{\text{CMAX},f,c}(i), \\ P_{\text{O\_PUCCH},b,f,c}(q_u) + 10\log_{10}\left(2^{\mu} \cdot M_{\text{RB},b,f,c}^{\text{PUCCH}}(i)\right) + PL_{b,f,c}(q_d) + \Delta_{\text{F\_PUCCH}}(F) + \Delta_{\text{TF},b,f,c}(i) + g_{b,f,c}(i,l) \end{array} \right\}$$

In Formula (3), $P_{\text{CMAX},f,c}$(i) is, for example, transmission power (also referred to as maximum transmission power, UE maximum output power, or the like) of a user terminal configured for the carrier f of the serving cell c in the transmission occasion i. $P_{\text{O\_PUCCH},b,f,c}$($q_u$) is, for example, a parameter (for example, it is also referred to as a parameter related to a transmission power offset, a transmission power offset P0, a target received power parameter, or the like) related to the target received power configured for the active UL BWP b of the carrier f of the serving cell c in the transmission occasion i.

$M^{\text{PUCCH}}_{\text{RB},b,f,c}$(i) is, for example, the number of resource blocks (bandwidth) allocated to the PUCCH for the transmission occasion i in the active UL BWP b of the carrier f with the serving cell c and the subcarrier spacing $\mu$. $PL_{b,f,c}$($q_d$) is, for example, a path loss calculated by the user terminal by using index $q_d$ of a reference signal (a path loss reference RS, a DL RS for path loss measurement, or PUCCH-PathlossReferenceRS) for a downlink BWP associated with the active UL BWP b of the carrier f of the serving cell c.

$\Delta_{\text{F\_PUCCH}}$(F) is an higher layer parameter given for each PUCCH format. $\Delta_{\text{TF},b,f,c}$(i) is a transmission power adjustment component (offset) for the UL BWP b of the carrier f of the serving cell c.

$g_{b,f,c}$(i,l) is a value (for example, the power control adjustment state, the cumulative value of the TPC command, the closed-loop value, and the PUCCH power adjustment state) based on the TPC command of the power control adjustment state index 1 of the active UL BWP of the carrier f of the serving cell c and the transmission occasion i. For example, $g_{b,f,c}$(i,l) may be represented by Formula (4).

[Math. 4]

(Formula 4)

$$g_{b,f,c}(i,l) = g_{b,f,c}(i - i_0, l) + \sum_{m=0}^{C(C_i)-1} \delta_{\text{PUCCH},b,f,c}(m,l)$$

In Formula (4), $\delta_{\text{PUCCH},b,f,c}(m,l)$ is a TPC command value in a PUCCH transmission occasion m. $\sum_{m=0}^{C(C\_i)-1}\delta_{\text{PUCCH},b,f,c}(m,l)$ is a sum of TPC command values in the set of TPC command values of a group $C(C_i)$ between a $K_{\text{PUCCH}}(i-i_0)-1$ symbol before a transmission occasion $i-i_0$ of the PUCCH and a $K_{\text{PUCCH}}(i)$ symbol before a transmission occasion i of the PUCCH. Here, io is an integer of 1 or more. The TPC command value in a transmission occasion of a certain PUCCH may be, for example, a TPC command indicated by a TPC command field value in the DCI (for example, DCI format 1_0 or 1_1) detected in the active UL BWP b of the carrier f of the serving cell c or a TPC command indicated by a TPC command field value in the DCI (for example, DCI format 2_2) that has CRC parity bits to be scrambled by a specific radio network temporary identifier (RNTI) (for example, TPC-PUCCH-RNTI) (that is to be CRC scrambled).

If the UE is provided with the information indicating that the two PUCCH power control adjustment states are used (twoPUCCH-PC-AdjustmentStates) and the PUCCH spatial relation information (PUCCH-SpatialRelationInfo), l={0,1}, and if the UE is not provided with the information indicating that the two PUCCH power control adjustment states are used or the PUCCH spatial relation information, 1 = 0 is possible.

If the UE obtains the TPC command value from DCI format 1_0 or 1_1, and if the UE is provided with the PUCCH spatial relation information, the UE may obtain a mapping between the PUCCH spatial relation information ID (pucch-SpatialRelationInfoId) value and the closed loop index (closedLoopIndex, power adjustment state index 1) by means of the index provided by the P0 ID for the PUCCH (p0-PUCCH-Id in p0-Set in PUCCH-PowerControl in PUCCH-Config). When the UE has received an activation command including the value of a PUCCH spatial relation information ID, the UE may determine the value of the closed loop index that provides the value of 1 through a link to a corresponding PUCCH P0 ID.

If the UE is provided with, for the active UL BWP b of the carrier f of the serving cell c, a configuration of the $P_{O\_\text{PUCCH},b,f,c}(q_u)$ value for the corresponding PUCCH power adjustment state 1 by a higher layer, $g_{b,f,c}(i, 1) = 0$, and k = 0, 1,..., i. If the UE is provided with the PUCCH spatial relation information, the UE may determine the value of 1 from the value of $q_u$ on the basis of the PUCCH spatial relation information associated with the PUCCH P0 ID corresponding to $q_u$ and the closed loop index value corresponding to 1.

$q_u$ may be a PUCCH P0 ID (p0-PUCCH-Id) indicating the PUCCH P0 (P0-PUCCH) in the PUCCH P0 set (p0-Set).

Note that Formulae (3) and (4) are merely examples and are not limited thereto. It is sufficient if the user terminal controls the transmission power of the PUCCH on the basis of at least one parameter exemplified in Formulae (3) and (4), and an additional parameter may be included, or some parameters may be omitted. In addition, in Formulae (3) and (4) above, the transmission power of the PUCCH is controlled for each active UL BWP of a certain carrier of a certain serving cell, but it is not limited thereto. At least a part of the serving cell, the carrier, the BWP, and the power control adjustment state may be omitted.

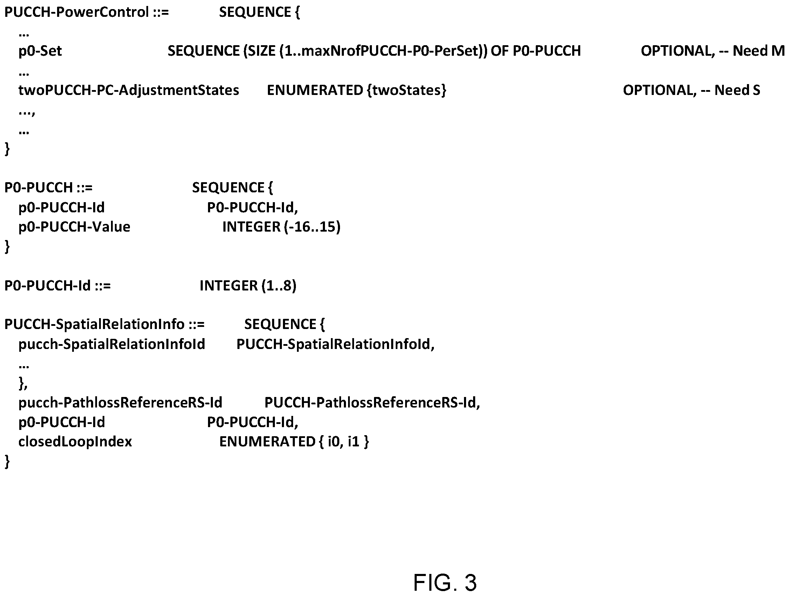

Fig. 3 is a diagram illustrating an example of an RRC information element of transmission power control of a PUCCH of Rel. 16. As illustrated in Fig. 3, the UE performs transmission power control of the PUCCH on the basis of an RRC information element (PUCCH-PowerControl) related to transmission power control of the PUCCH. PUCCH-PowerControl is included in the RRC information element for PUCCH configuration (PUCCH-Config).

As illustrated in Fig. 3, PUCCH-PowerControl includes a parameter (p0-Set) representing a set of parameters for giving at least $P_{O\_\text{PUCCH},b,f,c}(q_u)$ p0-Set includes a parameter (P0-PUCCH) for giving $P_{O\_\text{PUCCH},b,f,c}(j)$.

In addition, as illustrated in Fig. 3, the P0-PUCCH includes a parameter (p0-PUCCH-Id) indicating the PUCCH P0 ID and a parameter (p0-PUCCH-Value) related to the value of the PUCCH P0. The UE is configured with a set of a plurality of P0 on the basis of p0-Set. That is, in the UE, a plurality of P0 is configured for each PUCCH configuration parameter (PUCCH-Config).

In addition, PUCCH-PowerControl includes a parameter (twoPUCCH-PC-AdjustmentStates) for configuring two transmission power control adjustment states. The UE may determine that two power adjustment states (closed loop power control states) may be configured when twoPUCCH-PC-AdjustmentStates is configured.

In addition, in the UE as in the example illustrated in Fig. 3, a parameter (PUCCH-SpatialRelationInfo) related to spatial relation information of the PUCCH is configured. The parameter (PUCCH-SpatialRelationInfo) related to the spatial relation information of the PUCCH is identified by the spatial relation information ID (pucch-SpatialRelationInfoId) of the PUCCH. The parameter (PUCCH-SpatialRelationInfo) related to the spatial relation information of the PUCCH includes at least a parameter (p0-PUCCH-Id) indicating the PUCCH P0 ID and a parameter (closedLoopIndex) of closed loop index configuration. That is, in the transmission power control of the PUCCH, P0 and the closed loop index are configured for each spatial relation of the PUCCH.

<SRS Transmission Power Control>

For example, using the index 1 of the power control adjustment state, the transmission power ($P_{SRS,b,f,c}(i,q_s,l)$) of the SRS in the SRS transmission occasion (also referred to as a transmission period or the like) i for the active UL BWP b of the carrier f of the serving cell c may be expressed by Formula (5) below.

The power control adjustment state may be referred to as an SRS power control adjustment state, a value based on the TPC command, a cumulative value of the TPC command, a closed-loop value, a first or second state, or the like. 1 may be referred to as closed loop index.

In addition, the SRS transmission occasion i is a predetermined period during which the SRS is transmitted, and may include, for example, one or more symbols and one or more slots.

[Math. 5]

(Formula 5)

$$P_{SRS,b,f,c}(i,q_s,l) =$$

$$min \begin{cases} P_{CMAX,f,c}(i), \\ P_{O\_SRS,b,f,c}(q_s) + 10\log_{10}\left(2^\mu \cdot M_{SRS,b,f,c}(i)\right) + \alpha_{SRS,b,f,c}(q_s) \cdot PL_{b,f,c}(q_d) + h_{b,f,c}(i,l) \end{cases}$$

In Formula (5), $P_{CMAX,f,c}(i)$ is, for example, UE maximum output power for the carrier f of the serving cell c in the SRS transmission occasion i. $P_{O\_SRS,b,f,c}(q_s)$ is a parameter (for example, it is also referred to as a parameter related to a transmission power offset, a transmission power offset P0, a target received power parameter, or the like) related to the target received power provided by p0 with respect to the active UL BWP b of the carrier f of the serving cell c and the SRS resource set $q_s$ (provided by SRS-ResourceSet and SRS-ResourceSetId).

$M_{SRS,b,f,c}(i)$ is an SRS bandwidth represented by the number of resource blocks for the SRS transmission occasion i on the active UL BWP b of the carrier f with the serving cell c and the subcarrier spacing μ.

$\alpha_{SRS,b,f,c}(q_s)$ is provided by α (for example, alpha) for the active UL BWP b of the carrier f of the serving cell c and the subcarrier spacing μ, and the SRS resource set $q_s$.

$PL_{b,f,c}(q_d)$ is a DL path-loss estimation value [dB] calculated by the UE using the RS resource index $q_d$ for the active DL BWP of the serving cell c and the SRS resource set $q_s$. The RS resource index $q_d$ is a path loss reference RS (DL RS for path loss measurement, for example, provided by pathlossReferenceRS) associated with the SRS resource set $q_s$, and is an SS/PBCH block index (for example, ssb-Index) or a CSI-RS resource index (for example, csi-RS-Index).

$h_{b,f,c}(i,l)$ is the SRS power control adjustment state for the active UL BWP of the carrier f of the serving cell c and for the SRS transmission occasion i. When the configuration of the SRS power control adjustment state (for example, srs-PowerControlAdjustmentStates) indicates the same power control adjustment state for the SRS transmission and the PUSCH transmission, the current PUSCH power control adjustment state is $f_{b,f,c}(i,l)$. On the other hand, when the configuration of the SRS power control adjustment state indicates the power control adjustment state independent of the SRS transmission and the PUSCH transmission, and the configuration of the TPC accumulation is not provided, the SRS power control adjustment states $h_{b,f,c}(i)$ may be expressed by Formula (6).

[Math. 6]

(Formula 6)

$$h_{b,f,c}(i,l) = h_{b,f,c}(i - i_0) + \sum_{m=0}^{C(S_i)-1} \delta_{SRS,b,f,c}(m)$$

In Formula (6), $\delta_{SRS,b,f,c}(m)$ is encoded together with another TPC command in the PDCCH having the DCI (for example, DCI format 2_3). $\delta_{SRS,b,f,c}(m)$ is a TPC command value at the transmission occasion m of the SRS. $\sum_{m=0}^{C(S\_i)-1}\delta_{SRS,b,f,c}(m)$ is a sum of TPC command values in the set of TPC command values of a group $C(S_i)$ between $K_{SRS}(i-i_0)-1$ symbol before the SRS transmission occasion $i-i_0$ and $K_{SRS}(i)$ symbol before the SRS transmission occasion i on the active UL BWP b of the carrier f with the serving cell c and the subcarrier spacing μ. Here, io is an integer of 1 or more.

Note that Formulae (5) and (6) are merely examples and are not limited thereto. It is sufficient if the user terminal controls the transmission power of the SRS on the basis of at least one parameter exemplified in Formulae (5) and (6), and an additional parameter may be included, or some parameters may be omitted. In addition, in Formulae (5) and (6) above, the transmission power of the SRS is controlled for each BWP of a certain carrier of a certain cell, but it is not limited thereto. At least a part of the cell, the carrier, the BWP, and the power control adjustment state may be omitted.

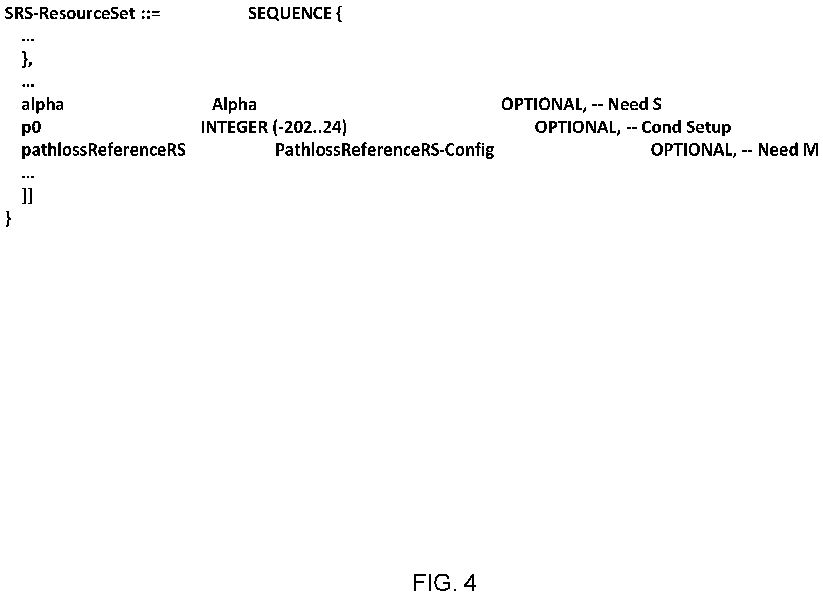

Fig. 4 is a diagram illustrating an example of an RRC information element of transmission power control of a SRS of Rel. 16. As illustrated in Fig. 4, the UE performs the transmission power control of the SRS on the basis of the information included in the RRC information element (SRS-ResourceSet) related to the configuration of the SRS resource set.

As illustrated in Fig. 4, the SRS-ResourceSet includes at least a parameter (P0) related to $P_{O\_SPS,b,f,c}(q_s)$ and a parameter (alpha) related to $\alpha_{SRS,b,f,c}(q_s)$. That is, in the UE, one P0 and one $\alpha$ are configured for each SRS resource set.

(Indication of Power Control Configuration)

In Rel. 15 NR, switching between multiple states of open loop (OL)-TPC or closed loop (CL)-TPC is possible by the SRI field in the DCI to follow a change in the spatial relation. When the usage of the SRS resource set is codebook transmission, the maximum number of SRI field values is 2 (the SRI field length is 1 bit), and when the usage of the SRS resource set is noncodebook transmission, the maximum number of SRI field values is 4 (the SRI field length is 2 bits).

In order to configure the power control configuration for the PUSCH, the PUSCH power control information (PUSCH-PowerControl) in the PUSCH configuration information (PUSCH-Config) includes a list (sri-PUSCH-Mapping-ToAddModList) of power control configuration (SRI-PUSCH-PowerControl) mapped to the SRI field value. The power control configuration includes a power control configuration ID (sri-PUSCH-PowerControlId) corresponding to the SRI field value, a path loss reference RS ID (sri-PUSCH-PathlossReferenceRS-Id) indicating a path loss reference RS, a P0-$\alpha$ set ID (sri-P0-PUSCH-AlphaSetId) indicating a P0 and $\alpha$ set, and a closed loop (CL) ID (sri-PUSCH-ClosedLoopIndex) corresponding to the power control state 1.

At least one of the path loss reference RS ID, the P0-$\alpha$ set ID, and the closed loop ID may be referred to as power control (transmission power control, TPC) parameter. At least one of the path loss reference RS ID and the P0-$\alpha$ set ID, which is used for open loop (OL) power control, may be referred to as an OL power control (TPC) parameter. The closed loop ID, which is used for closed loop (CL) power control, may be referred to as a CL power control (TPC) parameter.

For example, power control configuration #0 including P0 #0, $\alpha$ #0, path loss reference RS #0, and power control adjustment state #0 (1 = 0) may be associated with SRI field value 0, and power control configuration #1 including P0 #1, $\alpha$ #1, path loss reference RS #1, and power control adjustment state #1 (1 = 1) may be associated with SRI field value 1. The UE is indicated by the SRI field for the associated power control configuration.

When the UE is configured with only one SRS resource, the SRI field length is 0 bits.

In order to configure the power control configuration for the PUCCH, the power control configuration (PUCCH-PowerControl) is included in the PUCCH configuration information (PUCCH-Config). The power control configuration includes a correction value $\Delta_{F\_PUCCH}(F)$ (deltaF-PUCCH-f0, deltaF-PUCCH-f1, deltaF-PUCCH-f2, deltaF-PUCCH-f3, deltaF-PUCCH-f4) for each PUCCH format, a set of P0 (p0-Set), a set of path loss reference RSs (pathlossReferenceRSs), and information indicating whether or not to use two PUCCH power adjustment states (twoPUCCH-PC-AdjustmentStates). The path loss reference RS may be represented by an SSB index (SSB-Index) or a CSI-RS (NZP-CSI-RS resource ID (NZP-CSI-RS-ResourceId)).

As described above, in Rel. 15 NR, the power control configuration can be switched.

(Multi-TRPs)

In NR, studies are underway to allow one or more transmission/reception points (TRPs)(multi-TRPs (MTRPs)) to perform DL transmission to the UE by using one or more panels (multi-panels). In addition, studies are underway to allow the UE to perform UL transmission to one or more TRPs by using one or more panels.

Note that the plurality of TRPs may correspond to the same cell identifier (ID), or may correspond to different cell IDs. The cell ID may be a physical cell ID or a virtual cell ID.

The multi-TRPs (for example, TRPs #1 and #2) are connected by an ideal/non-ideal backhaul, and information, data, and the like may be exchanged. A different codeword (CW) and a different layer may be transmitted from each TRP of the multi-TRPs. Non-coherent joint transmission (NCJT) may be used as one form of multi-TRP transmission.

In the NCJT, for example, TRP #1 performs modulation mapping and layer mapping on a first codeword, uses first precoding in a first number of layers (for example, two layers), and transmits a first PDSCH. In addition, TRP #2 performs modulation mapping and layer mapping on a second codeword, uses second precoding in a second number of layers (for example, two layers), and transmits a second PDSCH.

Note that a plurality of PDSCHs (multi-PDSCHs) subjected to the NCJT may be defined as partially or completely overlapping regarding at least one of time domain or frequency domain. That is, the first PDSCH from a first TRP and the second PDSCH from a second TRP may overlap in at least one of time resource or frequency resource.

The first PDSCH and the second PDSCH may be assumed not to be in quasi-co-location (QCL) relation (not quasi-co-located). Reception of the multi-PDSCHs may be replaced with simultaneous reception of PDSCHs that are not of a certain QCL type (for example, QCL type D).

A plurality of PDSCHs (which may be referred to as multiple PDSCHs) from the multi-TRPs may be scheduled by using one piece of DCI (single DCI, single PDCCH) (single master mode, single-DCI-based multi-TRPs). A plurality of PDSCHs from the multi-TRPs may be scheduled by using a plurality of pieces of DCI (multi-DCI or multiple PDCCHs) (multi-master mode, multi-DCI-based multi-TRPs).

In URLLC for multi-TRPs, support of PDSCH (transport block (TB) or codeword (CW)) repetition across the multi-TRPs has been studied. It has been studied that a repetition method (URLLC schemes, e.g., Schemes 1, 2a, 2b, 3, 4) across multi-TRPs on a frequency domain, a layer (spatial) domain, or a time domain is supported. In Scheme 1, multi-PDSCHs from multi-TRPs are subjected to space division multiplexing (SDM). In Schemes 2a and 2b, PDSCHs from multi-TRPs are subjected to frequency division multiplexing (FDM). In Scheme 2a, the redundancy version (RV) is the same for multi-TRPs. In Scheme 2b, the RV may be the same or different for multi-TRPs. In Schemes 3 and 4, multi-PDSCHs from multi-TRPs are subjected to time division multiplexing (TDM). In Scheme 3, multi-PDSCHs from multi-TRPs are transmitted in one slot. In Scheme 4, multi-PDSCHs from multi-TRPs are transmitted in different slots.

Such a multi-TRPs scenario can perform more flexible transmission control using a high-quality channel.

In RRC configuration information for linking a plurality of pairs of PDCCHs and PDSCHs having a plurality of TRPs, one control resource set (CORESET) in PDCCH configuration information (PDCCH-Config) may correspond to one TRP, to support intra-cell (having the same cell ID) and inter-cell (having different cell IDs) multi-TRP transmission based on the plurality of PDCCHs.

When at least one of the conditions 1 and 2 described below is satisfied, the UE may judge that it is multi-DCI-based multi-TRPs. In this case, the TRP may be replaced with a CORESET pool index.

[Condition 1]

A CORESET pool index of 1 is configured.

[Condition 2]

Two different values (for example, 0 and 1) of the CORESET pool index are configured.

When the condition described below is satisfied, the UE may judge that it is single-DCI-based multi-TRPs. In this case, the two TRPs may be replaced with two TCI states indicated by the MAC CE/DCI.

[Condition]

In order to indicate one or two TCI states for one codepoint in the TCI field in the DCI, an "enhanced TCI states activation/deactivation for UE-specific PDSCH MAC CE" is used.

The DCI for the common beam indication may be a UE-specific DCI format (for example, DL DCI format (for example, 1_1 and 1_2), UL DCI format (for example, 0_1 and 0_2)) or a UE-group common DCI format.

(Simultaneous Beam Update of Plurality of CCs)

In Rel. 16, one MAC CE can update beam indexes (TCI states) of a plurality of CCs.

The UE may have up to two applicable CC lists (for example, applicable-CC-lists) configured by RRC. When the two applicable CC lists are configured, the two applicable CC lists may respectively correspond to intra-band CA in FR1 and intra-band CA in FR2.

The activation MAC CE of the TCI state of the PDCCH activates the TCI state associated with the same CORESET ID on all BWPs/CCs in the applicable CC list.

The activation MAC CE of the TCI state of the PDSCH activates the TCI state on all the BWPs/CCs in the applicable CC list.

The activation MAC CE of the spatial relation of A-SRS/SP-SRS activates the spatial relation associated with the same SRS resource ID on all BWPs/CCs in the applicable CC list.

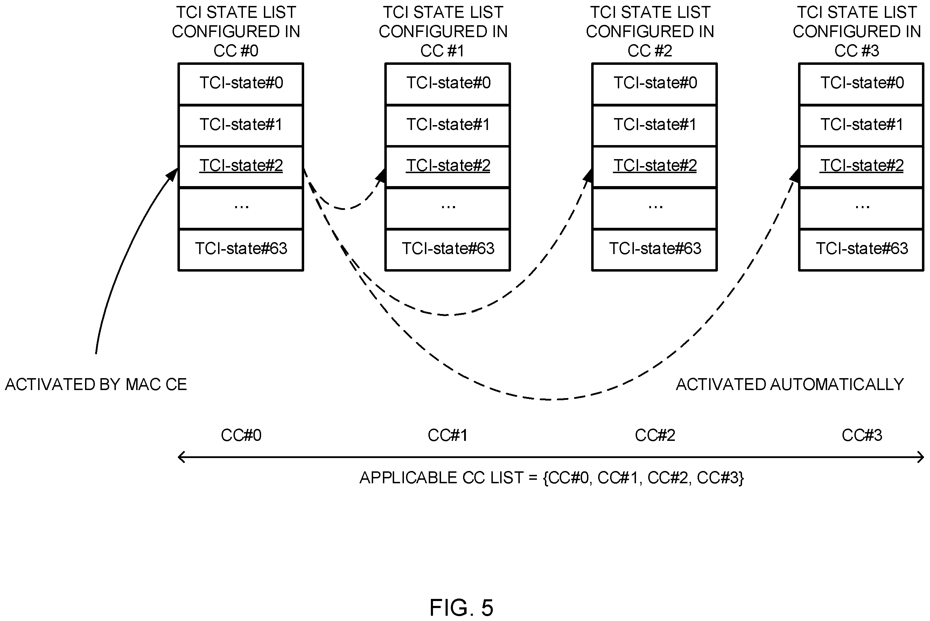

In the example of Fig. 5, the UE is configured with an applicable CC list indicating CCs #0, #1, #2, and #3 and a list indicating 64 TCI states for CORESET or PDSCH of each CC. When one TCI state for CC #0 is activated by the MAC CE, the corresponding TCI state is activated in CCs #1, #2, and #3.

It has been studied that such simultaneous beam update is applicable only to a single TRP case.

For the PDSCH, the UE may be based on the procedure A below.

[Procedure A]

The UE receives an activation command to map up to 8 TCI states to a codepoint of a DCI field (TCI field) within one CC/DL BWP or within one set of CC/BWP. If one set of TCI state IDs is activated for one set of CC/DL BWP, the applicable list of CCs is determined by the indicated CC in the activation command and the same set of TCI states is applied to all DL BWPs in the indicated CC. One set of TCI state IDs may be activated for one set of CC/DL BWP only when the UE is not provided with different values of the CORESET pool index (CORESETPoolIndex) in the CORESET information element (ControlResourceSet) or at least one TCI codepoint mapped to two TCI states.

For the PDCCH, the UE may be based on the procedure B below.

[Procedure B]

When the UE is provided with a list of up to two cells for simultaneous TCI state activation with a simultaneous TCI update list (at least one of simultaneousTCI-UpdateList-r16 and simultaneousTCI-UpdateListSecond-r16) by a simultaneous TCI cell list (simultaneousTCI-CellList), the UE applies an antenna port quasi co-location (QCL) provided by the TCI state having the same activated TCI state ID value to the CORESET with an index p in all configured DL BWPs of all configured cells in one list determined from a serving cell index provided by the MAC CE command. A simultaneous TCI cell list can be provided for simultaneous TCI state activation only when the UE is not provided with different values of the CORESET pool index (CORESETPoolIndex) in the CORESET information element (ControlResourceSet) or at least one TCI codepoint mapped to two TCI states.

For semi-persistent (SP)/aperiodic (AP)-SRS, the UE may be based on the procedure C described below.

[Procedure C]

For one set of CC/BWP, when spatial relation information (spatialRelationInfo) for an SP or AP-SRS resource configured by the SRS resource information element (higher layer parameter SRS-Resource) is activated/updated by the MAC CE, the applicable list of CCs is indicated by the simultaneous spatial update list (higher layer parameter simultaneousSpatial-UpdateList-r16 or simultaneousSpatial-UpdateListSecond-r16), and the spatial relation information is applied to the SP or AP-SRS resource with the same SRS resource ID in all BWPs in the indicated CC. Only when the UE is not provided with different values of the CORESET pool index (CORESETPoolIndex) in the CORESET information element (ControlResourceSet) or at least one TCI codepoint mapped to two TCI states, for one set of CC/BWP, the spatial relation information (spatialRelationInfo) for the SP or AP-SRS resources configured by the SRS resource information element (higher layer parameter SRS-Resource) is activated/updated by the MAC CE.

The simultaneous TCI cell list (simultaneousTCI-CellList) and simultaneous TCI update list (at least one of simultaneousTCI-UpdateList1-r16 and simultaneousTCI-UpdateList2-r16) are a list of serving cells in which the TCI relation can be simultaneously updated by using the MAC CE. SimultaneousTCI-UpdateList1-r16 and simultaneousTCI-UpdateList2-r16 do not include the same serving cell.

The simultaneous spatial update list (at least one of the higher layer parameters simultaneousSpatial-UpdatedList1-r16 and simultaneousSpatial-UpdatedList2-r16) is a list of serving cells in which the spatial relation can be simultaneously updated by using the MAC CE. SimultaneousSpatial-UpdatedListl-r16 and simultaneousSpatial-UpdatedList2-r16 do not include the same serving cell.

Here, the simultaneous TCI update list and the simultaneous spatial update list are configured by the RRC, the CORESET pool index of the CORESET is configured by the RRC, and the TCI codepoint mapped to the TCI state is indicated by the MAC CE.

(Unified/Common TCI Framework)

According to the unified TCI framework, UL and DL channels can be controlled by a common framework. The unified TCI framework may indicate the common beam (common TCI state) and apply it to all UL and DL channels, or apply the common beam for UL to all UL channels and apply the common beam for DL to all DL channels, instead of defining the TCI state or spatial relation for each channel as in Rel. 15.

One common beam for both DL and UL, or a common beam for DL and a common beam for UL (two common beams in total) has been studied.

The UE may assume the same TCI state (joint TCI state, joint TCI pool, joint common TCI pool, joint TCI state set) for UL and DL. The UE may assume different TCI states (separate TCI state, separate TCI pool, UL separate TCI pool and DL separate TCI pool, separate common TCI pool, UL common TCI pool, and DL common TCI pool) for each of UL and DL.

The UL and DL default beams may be aligned by beam management based on MAC CE (MAC CE level beam indication). The default TCI state of the PDSCH may be updated to match the default UL beam (spatial relation).

Beam management based on the DCI (DCI level beam indication) may indicate the common beam/unified TCI state from the same TCI pool (joint common TCI pool, joint TCI pool, set) for both UL and DL. X (> 1) TCI states may be activated by the MAC CE. The UL/DL DCI may select one from the X active TCI states. The selected TCI state may be applied to the channels/RSs of both UL and DL.

The TCI pool (set) may be a plurality of TCI states configured by the RRC parameter, or may be a plurality of TCI states (active TCI state, active TCI pool, set) activated by the MAC CE among the plurality of TCI states configured by the RRC parameter. Each TCI state may be a QCL type A/D RS. The SSB, the CSI-RS, or the SRS may be configured as the QCL type A/D RS.

The number of TCI states corresponding to each of one or more TRPs may be defined. For example, the number N ($\geq$ 1) of TCI states (UL TCI states) applied to the UL channel/RS and the number M ($\geq$ 1) of TCI states (DL TCI states) applied to the DL channel/RS may be defined. At least one of N and M may be notified/configured/indicated to the UE via higher layer signaling/physical layer signaling.

In the present disclosure, when described as N = M = X (X is any integer), it may mean that the UE is notified/configured/indicated of a TCI state (joint TCI state) common to X (corresponding to X TRPs) ULs and DLs. In addition, when described as N = X (X is any integer) and M = Y (Y is any integer, Y = X may be possible), it may mean that X (corresponding to X TRPs) UL TCI states and Y (corresponding to Y TRPs) DL TCI states (that is, separate TCI state) are respectively notified/configured/indicated to the UE.

For example, when described as N = M = 1, it may mean that a TCI state common to one UL and DL for a single TRP is notified/configured/indicated to the UE (joint TCI state for a single TRP).

In addition, for example, when described as N = 1 and M = 1, it may mean that one UL TCI state and one DL TCI state for a single TRP are separately notified/configured/indicated to the UE (separate TCI state for a single TRP).

In addition, for example, when described as N = M = 2, it may mean that a TCI state common to a plurality of (two) ULs and DLs for a plurality of (two) TRPs is notified/configured/indicated to the UE (joint TCI state for a plurality of TRPs).

In addition, for example, when described as N = 2 and M = 2, it may mean that a plurality of (two) UL TCI states and a plurality of (two) DL TCI states for a plurality of (two) TRPs are notified/configured/indicated to the UE (separate TCI state for a plurality of TRPs).

Note that, in the above example, the case where the values of N and M are 1 or 2 has been described, but the values of N and M may be 3 or more, and may be different for N and M.

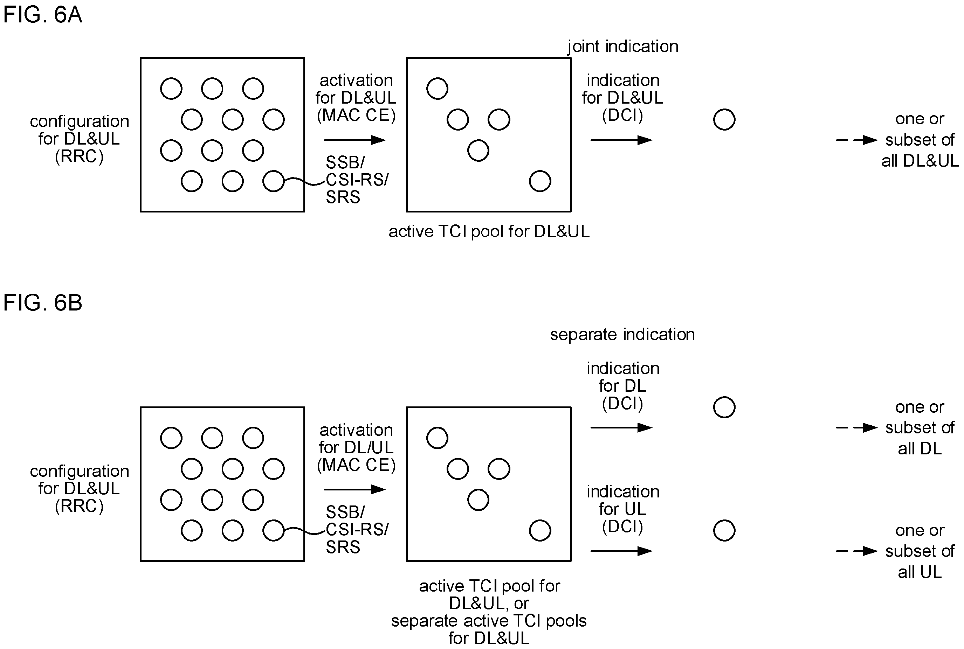

In the example of Fig. 6A, the RRC parameter (information element) configures a plurality of TCI states for both DL and UL. The MAC CE may activate a plurality of TCI states among the plurality of TCI states configured. The DCI may indicate one of the plurality of TCI states activated. The DCI may be UL/DL DCI. The indicated TCI state may be applied to at least one (or all) of the UL/DL channels/RSs. One piece of DCI may indicate both UL TCI and DL TCI.

In the example of Fig. 6A, one point may be one TCI state applied to both UL and DL, or two TCI states applied to UL and DL, respectively.

At least one of the plurality of TCI states configured by the RRC parameter and the plurality of TCI states activated by the MAC CE may be referred to as a TCI pool (common TCI pool, joint TCI pool, TCI state pool). The plurality of TCI states activated by the MAC CE may be referred to as an active TCI pool (active common TCI pool).

Note that, in the present disclosure, a higher layer parameter (RRC parameter) for configuring the plurality of TCI states may be referred to as configuration information for configuring the plurality of TCI states, and may be simply referred to as "configuration information". In addition, in the present disclosure, the indication of one of the plurality of TCI states by using the DCI may be receiving indication information indicating one of the plurality of TCI states included in the DCI, or may be simply receiving "indication information".

In the example of Fig. 6B, the RRC parameter configures a plurality of TCI states for both DL and UL (joint common TCI pool) The MAC CE may activate a plurality of TCI states (active TCI pool) among the plurality of TCI states configured. Active TCI pools (separate) for UL and DL may be configured/activated.

DL DCI or a new DCI format may select (indicate) one or more (for example, one) TCI states. The selected TCI state may be applied to one or more (or all) DL channels/RSs. The DL channel may be PDCCH/PDSCH/CSI-RS. The UE may determine the TCI state of each channel/RS of the DL using the operation of the TCI state in Rel. 16 (TCI framework). UL DCI or a new DCI format may select (indicate) one or more (for example, one) TCI states. The selected TCI state may be applied to one or more (or all) UL channels/RSs. The UL channel may be PUSCH/SRS/PUCCH. In this way, different pieces of DCI may separately indicate UL TCI and DL DCI.

The existing DCI format 1_1/1_2 may be used to indicate the common TCI state.

The common TCI framework may have separate TCI states for DL and UL.

(Unified TCI framework in Carrier Aggregation (CA))

It has been studied to introduce a unified TCI state framework in CA in NR of Rel. 17 and subsequent releases. The common TCI state indicated to the UE is expected to be common among CCs (cells) (at least QCL type D among CCs). This is because simultaneous reception of different DL channels/RSs of QCL type D and simultaneous transmission of UL channels/RSs having different spatial relation are not supported in the existing specifications (Rel. 15/16) except for a case of transmission and reception and the like using a plurality of TRPs.

In addition, in the unified TCI framework, updating/activation of the common TCI state ID has been studied for providing the common QCL information/common UL transmission space filter over a set of multiple CCs configured.

As a TCI state pool for CA, Options 1 and 2 below have been studied.

[Option 1]

A single TCI state pool configured by the RRC for a set of multiple CCs (cells)/BWPs configured may be shared (configured). For example, the cell group TCI state may be defined, or the TCI state pool for the PDSCH in the reference cell may be reused. In the TCI state, there is no CC (cell) ID for the QCL type A RS, and the CC (cell) ID for the QCL type A RS may be determined according to the target CC (cell) in the TCI state.

In Option 1, since the common TCI state pool is configured for each of the plurality of CCs/BWPs, when one common TCI state is indicated by the MAC CE/DCI, the indicated common TCI state may be applied to all CCs/BWPs (all CCs/BWPs included in a preset CC/BWP list).

[Option 2]

The TCI state pool may be configured by the RRC for each individual CC.

In Option 2, similarly to Rel. 16, when an applied CC/BWP list of simultaneous beam update is preset by the RRC, and beam update is performed by the MAC CE/DCI in any CC/BWP included in the CC/BWP list, the update may be applied to all CCs/BWPs.

In Option 1, the common TCI state pool is configured (shared) by the RRC for multiple CCs, the TCI state in the common TCI state pool is indicated by the common TCI state ID, and one RS determined on the basis of the TCI state will be used to indicate the QCL type D across the set of multiple CCs configured (Constraint 1).

In Option 2, a separate common TCI state pool is configured for each CC by the RRC, the TCI state in the common state pool is indicated by the common TCI state ID, and one RS determined on the basis of the TCI state will be used to indicate the QCL type D across the set of multiple CCs configured (Constraint 2).

(Constraints on QCL Configuration)

As described above, controlling a plurality of types of channel beams by a common beam indication/activation (MAC CE/DCI) in the common TCI framework has been studied, and this control is performed on one CC (cell).

The simultaneous beam update across multiple CCs as specified in Rel. 16 can update beams of multiple BWPs/CCs with one MAC CE beam indication, thereby reducing beam control overhead.

In Rel. 15/16, QCL source RSs (type A RS and type D RS) configured in the TCI state of the PDCCH DMRS/PDSCH DMRS (in the present disclosure, it may be simply referred to as DMRS) are limited to the following cases (Case 1) to (Case 3):

(Case 1) The type A RS is a tracking reference signal (TRS) (CSI-RS in which the higher layer parameter trs-Info is configured), and the type D RS is a CSI-RS equal to the type A RS.
(Case 2) The type A RS is the TRS, and the type D RS is the CSI-RS in which the higher layer parameter repetition is configured.
(Case 3) The type A RS is a CSI-RS in which the higher layer parameter trs-Info is not configured and the higher layer parameter repetition is not configured, and the type D RS is a CSI-RS equal to the type A RS.

Therefore, the type A RS and the type D RS are different CSI-RS resources only in the case of (Case 2) above.

In addition, the CSI-RS in which the higher layer parameter repetition is configured may be configured to assist reception beam determination of the UE. However, the reception beam determination of the UE can be performed without using the CSI-RS in which the higher layer parameter repetition is configured.

On the other hand, since the network (NW, e.g., base station) transmits the TRS as the type A RS, it is generally considered to operate the case of (Case 1) above in which the TRS is used as the type D RS.

Also in the common TCI framework, it is preferable to enable simultaneous beam update across the plurality of CCs. However, the QCL configuration between the PDCCH DMRS/PDSCH DMRS and the TRS in the plurality of CCs has the constraint described below.

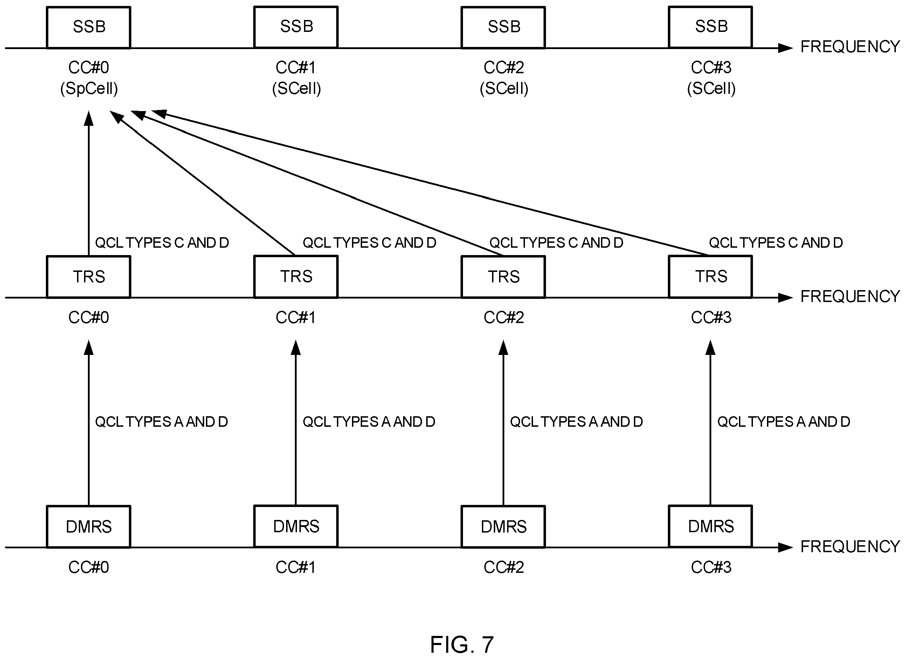

For example, configuration as illustrated in Fig. 7 is possible. It is assumed that CC #0, which is a special cell (SpCell) (primary cell (PCell) or primary secondary cell (PSCell)), and #1, #2, and #3, which are SCells, are configured, and the SSB, the TRS, and the PDCCH DMRS/PDSCH DMRS (which may be simply referred to as the DMRS) are transmitted in each CC. In this case, the TRS of each CC has a QCL types C and D relation with the SSB of CC #0, and the PDCCH of each CC has a QCL types A and D relation with the TRS of the same CC.

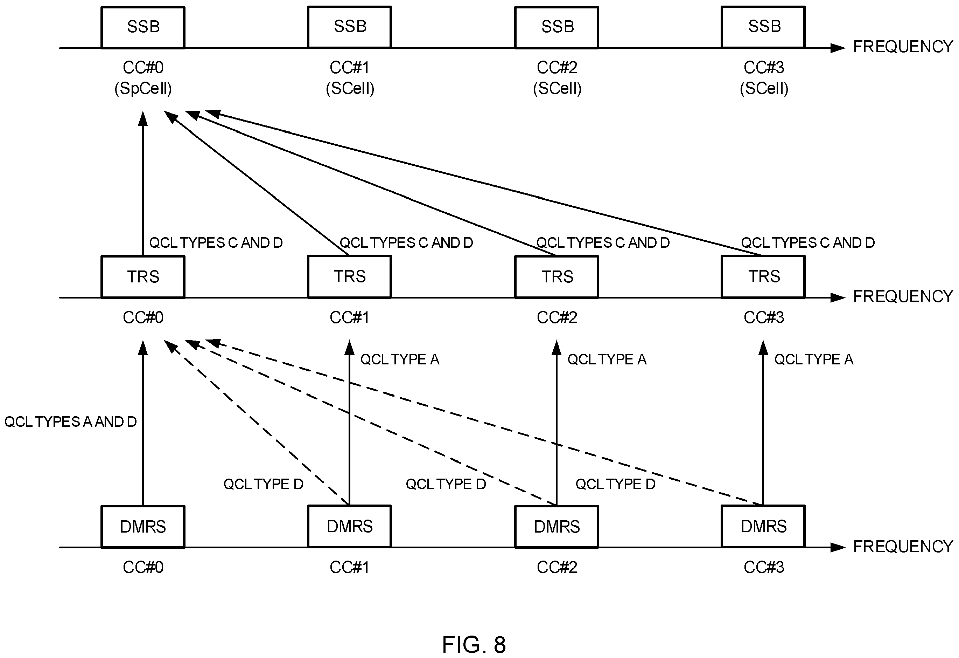

For example, configuration as illustrated in Fig. 8 is impossible. Similar to Fig. 7 described above, when the TRS of each CC has a QCL type C and D relation with the SSB of CC #0, and the DMRS of each CC has a QCL type A relation with the TRS of the same CC, the DMRSs of CCs #1, #2, and #3 cannot have a QCL type D relation with the TRS of CC #0 (indicated by the broken lines). When the TCI state of the PDCCH DMRS/PDSCH DMRS is the TRS, the QCL type A RS and the QCL type D RS need to be the same TRS.

In a case where the TRS is configured as the QCL type A/D RS in the TCI state of a certain CC, the TRS of another CC cannot be configured as the QCL type A/D RS. Therefore, even in a case where the common TCI pool or the common TCI is configured/updated/indicated between a plurality of CCs, the TCI state (the TCI state including the QCL type A/D RS) is configured for each CC.

When the CSI-RS is configured as the QCL type D RS in the TCI state of a certain CC, the CSI-RS of another CC can be configured as the QCL type D RS in the TCI state of the PDCCH/PDSCH of a certain CC. Also in this case, it is necessary to configure the CSI-RS/TRS of the same CC as the QCL type A RS in the TCI state. This is because the QCL type A RS indicates that parameters that determine channel identification, such as delay spread and average delay, are the same, and therefore values of these parameters may be different in different CCs.

A cell of the QCL type A RS needs to be the same as a cell of the PDSCH/PDCCH DMRS in which the TCI state is configured.

As described above, when the QCL type D RS is the TRS, the QCL type D RS needs to be the same as the QCL type A RS. In combination with the above description, when the QCL type D RS is the TRS, the cell of the QCL type D RS needs to be the same as the cell of the PDSCH/PDCCH DMRS in which the TCI state is configured.

When the QCL type D RS is a CSI-RS in which repetition is configured (with CSI-RS resource in NZP CSI-RS resource set in which higher layer parameter repetition is configured (higher layer parameter repetition is ON)), the cell of the QCL type D RS may be different from the cell of the PDSCH/PDCCH DMRS in which the TCI state is configured.

(Analysis)

Incidentally, when an arbitrary DL RS is a target DL RS in which the TCI state of Rel. 15/16 is valid on the basis of the rule of QCL in Rel. 15/16, configuring the arbitrary DL RS as the target DL RS in the DL TCI state of Rel. 17 and subsequent releases has been studied.

In the present disclosure, the target DL RS may mean a DL RS applying the TCI state (for example, TCI state of PDSCH/PDCCH DMRS). In addition, the target CC/cell may mean a CC/cell applying the TCI state (for example, TCI state of PDSCH/PDCCH DMRS).

The DL RS may include at least one of the CSI-RS and the PDSCH/PDCCH DMRS.

In addition, in Rel. 17 and subsequent releases, it is studied that the common TCI state is applied to an arbitrary channel/signal (for example, PDSCH/PDCCH/PUSCH/PUCCH/SRS/CSI-RS).

Furthermore, it has been studied that a list of CCs/BWPs to which the common TCI state is applied is configured/notified to the UE by using higher layer signaling in Rel. 17 and subsequent releases.

When the BWP ID/CC ID (for example, the RRC parameter "bwp-id"/"cell") of the source RS of the QCL type A/D in the QCL information (for example, the RRC parameter "QCL-Info") of the TCI state is not present, it is conceivable that the UE assumes that the source RS of the QCL type A/D is present in the BWP/CC to which the TCI state applies.

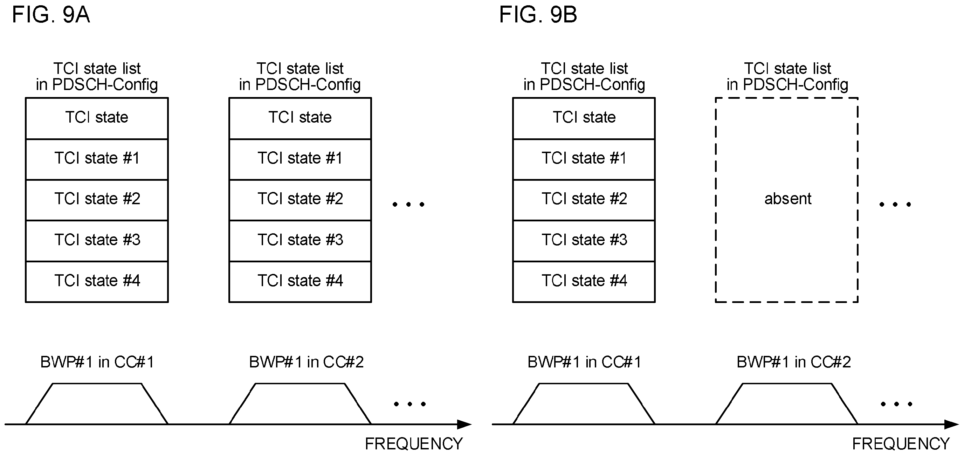

In Rel. 17 and subsequent releases, the TCI state pool/configuration for each BWP/CC (BWP/CC-specific TCI state pool/configuration, as described in Fig. 9A) and the TCI state pool/configuration common to a plurality of BWPs/CCs (BWP/CC common TCI state pool/configuration, as described in Fig. 9B) are studied.

In the TCI state pool/configuration common to BWPs/CCs, the case (Case A) in which the QCP type A RS and the QCL type D RS are configured for each BWP/CC and the case (Case B) in which the QCL type A RS is configured for each BWP/CC and a specific (one) QCL type D RS is configured for a plurality of BWPs/CCs in common (one for a plurality of BWPs/CCs) are considered.

In addition, in Rel. 17 and subsequent releases, it has been studied to define that the PL-RS is included in/associated with the UL TCI state or the joint TCI state.

Furthermore, in Rel. 17 and subsequent releases, it has been studied that a parameter (for example, at least one of P0, $\alpha$, and closed loop index, and it may be referred to in the present disclosure simply as a "TPC parameter") related to TPC other than PL-RS is defined to be associated with the UL TCI state or the joint TCI state.

More specifically, it has been studied that the setting of P0, $\alpha$, and closed loop index is defined to be configured/indicated for each PUSCH/PUCCH/SRS and for each UL TCI state/joint TCI state.

However, in the common TCI state framework (common TCI state framework in CA), a method for determining the PL-RS and a parameter related to the TPC is not sufficiently studied. When these studies are not sufficient, transmission power control cannot be appropriately performed, and communication quality, throughput, and the like may deteriorate.

For example, when the TCI state list/pool/configuration for each BWP/CC is applied, the UE can determine the PL-RS/TPC parameter for each BWP/CC corresponding to the common TCI state applied for each BWP/CC.

On the other hand, in Case A and Case B above, it is considered that one TCI state list is configured for a plurality of BWPs/CCs and correspondence between the TCI state and the PL-RS/TPC parameter is defined/configured/notified, but a rule for determining the PL-RS/TPC parameter for each BWP/CC is not sufficiently studied.

Therefore, the present inventors have conceived transmission power control of a UL channel/signal when using a TCI state applicable to a plurality of channels/signals.

Hereinafter, embodiments according to the present disclosure will be described in detail with reference to the drawings. Radio communication methods according to the respective embodiments may be applied independently, or may be applied in combination.

In the present disclosure, "A/B/C" and "at least one of A, B and C" may be replaced with each other. In the present disclosure, the cell, the serving cell, the CC, the carrier, the BWP, the DL BWP, the UL BWP, the active DL BWP, the active UL BWP, and the band may be replaced with each other. In the present disclosure, an index, an ID, an indicator, and a resource ID may be replaced with each other. In the present disclosure, support, control, controllable, operate, and operable may be replaced with each other.

In the present disclosure, configure, activate, update, indicate, enable, specify, and select may be replaced with each other.

In the present disclosure, the higher layer signaling may be any of, for example, radio resource control (RRC) signaling, medium access control (MAC) signaling, broadcast information, and the like, or a combination thereof. In the present disclosure, the RRC, the RRC signaling, the RRC parameter, the higher layer, the higher layer parameter, the parameter, the RRC information element (IE), and the RRC message may be replaced with each other.

For example, a MAC control element (MAC CE), a MAC protocol data unit (PDU), or the like may be used for the MAC signaling. The broadcast information may be, for example, a master information block (MIB), a system information block (SIB), remaining minimum system information (RMSI), other system information (OSI), or the like.

In the present disclosure, the MAC CE and the activation/deactivation command may be replaced with each other.

In the present disclosure, the pool, the set, the group, the list, and the candidate may be replaced with each other.

In the present disclosure, the DMRS, the DMRS port, and the antenna port may be replaced with each other.

In the present disclosure, the special cell, the SpCell, the PCell, and the PSCell may be replaced with each other.

In the present disclosure, the beam, the spatial domain filter, the spatial setting, the TCI state, the UL TCI state, the unified TCI state, the unified beam, the common TCI state, the common beam, the TCI assumption, the QCL assumption, the QCL parameter, the spatial domain reception filter, the UE spatial domain reception filter, the UE reception beam, the DL beam, the DL reception beam, the DL precoding, the DL precoder, the DL-RS, the QCL type D RS of the TCI state/QCL assumption, the QCL type A RS of the TCI state/QCL assumption, the spatial relation, the spatial domain transmission filter, the UE spatial domain transmission filter, the UE transmission beam, the UL beam, the UL transmission beam, the UL precoding, the UL precoder, and the PL-RS may be replaced with each other. In the present disclosure, the QCL type X-RS, the DL-RS associated with QCL type X, the DL-RS with QCL type X, a source of the DL-RS, the SSB, the CSI-RS, and the SRS may be replaced with each other.

In the present disclosure, the common beam, the common TCI, the common TCI state, the unified TCI, the unified TCI state, the TCI state applicable to DL and UL, the TCI state applied to a plurality of (a plurality of types of) channels/RSs, the TCI state applicable to a plurality of types of channels/RSs, and the PL-RS may be replaced with each other.

In the present disclosure, the plurality of TCI states configured by the RRC, the plurality of TCI states activated by the MAC CE, the pool, the TCI state pool, the active TCI state pool, the common TCI state pool, the joint TCI state pool, the separate TCI state pool, the common TCI state pool for UL, the common TCI state pool for DL, the common TCI state pool configured/activated by the RRC/MAC CE, and the TCI state information may be replaced with each other.

In the present disclosure, the panel, the uplink (UL) transmission entity, the TRP, the spatial relation, the control resource set (CORESET), the PDSCH, the codeword, the base station, the antenna port (for example, a demodulation reference signal (DMRS) port) of a signal, the antenna port group (for example, a DMRS port group) of a signal, the group for multiplexing (for example, a code division multiplexing (CDM) group, a reference signal group, and a CORESET group), the CORESET pool, the CORESET subset, the CW, the redundancy version (RV), and the layer (MIMO layer, transmission layer, and spatial layer) may be replaced with each other. In addition, the panel identifier (ID) and the panel may be replaced with each other. In the present disclosure, the TRP ID, the TRP-related ID, the CORESET pool index, the location (ordinal number, first TCI state or second TCI state) of one TCI state of two TCI states corresponding to one codepoint of a field in the DCI, and the TRP may be replaced with each other.

In the present disclosure, the TRP, the transmission point, the panel, the DMRS port group, the CORESET pool, and one of two TCI states associated with one codepoint of the TCI field may be replaced with each other.

In the present disclosure, the single TRP, the single TRP system, the single TRP transmission, and the single PDSCH may be replaced with one another. In the present disclosure, the multi-TRPs, the multi-TRP system, the multi-TRP transmission, and the multi-PDSCHs may be replaced with each other. In the present disclosure, the single DCI, the single PDCCH, the single-DCI-based multi-TRPs, and that two TCI states on at least one TCI codepoint are activated may be replaced with each other.

In the present disclosure, the single TRP, the channel using a single TRP, the channel using one TCI state/spatial relation, that the multi-TRPs are not enabled by the RRC/DCI, that the multiple TCI states/spatial relations are not enabled by the RRC/DCI, and that a CORESET pool index (CORESETPoolIndex) value of 1 is not configured for any CORESET and no codepoint in the TCI field is mapped to two TCI states may be replaced with each other.

In the present disclosure, the multi-TRPs, the channel using multi-TRPs, the channel using a plurality of TCI states/spatial relations, that the multi-TRPs are enabled by the RRC/DCI, that the plurality of TCI states/spatial relations are enabled by the RRC/DCI, and at least one of the single-DCI-based multi-TRPs and the multi-DCI-based multi-TRPs may be replaced with each other. In the present disclosure, the multi-DCI-based multi-TRPs and that a CORESET pool index (CORESETPoolIndex) value of 1 is configured for the CORESET may be replaced with each other. In the present disclosure, the single-DCI-based multi-TRPs and that at least one codepoint of the TCI field is mapped to two TCI states may be replaced with each other.

In the present disclosure, TRP #1 (first TRP) may correspond to CORESET pool index = 0, or may correspond to a first TCI state of two TCI states corresponding to one codepoint of the TCI field. TRP #2 (second TRP) may correspond to CORESET pool index = 1, or may correspond to a second TCI state of two TCI states corresponding to one codepoint of the TCI field.

In the present disclosure, the cell, the serving cell, the CC, the BWP, the BWP in a CC, and the band may be replaced with each other.

In the present disclosure, "parameter X is not configured", "parameter X is not present", "parameter X is absent", "parameter X is not configured to be valid", "parameter X is configured to be invalid", and the like may be replaced with each other.

(Radio Communication Method)

In the present disclosure, the DL TCI, the DL only TCI, the separate DL only TCI, the DL common TCI, the DL unified TCI, the common TCI, and the unified TCI may be replaced with each other. In the present disclosure, the UL TCI, the UL only TCI, the separate UL only TCI, the UL common TCI, the UL unified TCI, the common TCI, and the unified TCI may be replaced with each other.

In the present disclosure, configuring/indicating/updating the separate TCI state, configuring/indicating the DL only TCI state, configuring/indicating/updating the UL only TCI state, and configuring/indicating/updating the DL and UL TCI state may be replaced with each other.

In the present disclosure, the case of the joint TCI pool and the case where the joint TCI pool is configured may be replaced with each other. In the present disclosure, the case of the separate TCI pool and the case where the separate TCI pool is configured may be replaced with each other.

In the present disclosure, the case where the joint TCI pool is configured, the case where the TCI pool configured for DL and the TCI pool configured for UL are common, the case where the TCI pool for both DL and UL is configured, and the case where one TCI pool (one set of TCIs) is configured may be replaced with each other.

In the present disclosure, the case where the separate TCI pool is configured, the case where the TCI pool configured for DL and the TCI pool configured for UL are different, the case where the TCI pool for DL (first TCI pool, first TCI set) and the TCI pool for UL (second TCI pool, second TCI set) are configured, the case where a plurality of TCI pools (a plurality of sets of TCIs) is configured, and the case where the TCI pool for DL is configured may be replaced with each other. When the TCI pool for DL is configured, the TCI pool for UL may be equal to the configured TCI pool.

In the present disclosure, the channel/RS to which the common TCI is applied may be PDSCH/HARQ-ACK information/PUCCH/PUSCH/CSI-RS/SRS.

In each embodiment of the present disclosure, the pool (list) including a plurality of unified TCI states may be configured/activated and one or more TCI states of the plurality of unified TCI states may be indicated for the UE. The configuring/activation may be performed using configuration information transmitted via higher layer signaling (for example, RRC signaling/MAC CE). The indication may be performed using indication information transmitted by using the DCI.

Note that, in the present disclosure, the signaling configuration, the signaling, the configuring, the configuration, the configuration information, the indication, the indication information, the list, the pool, and the like may be replaced with each other.

The TCI state in each embodiment of the present disclosure may be replaced with the joint TCI state, the joint TCI state for UL, and the separate UL TCI state. In addition, the joint TCI state and the separate TCI state may be simply referred to as "TCI state".

<First Embodiment>

The UE may derive/determine the PL-RS/TPC parameter for a certain BWP/CC on the basis of the TCI state list configured in another BWP/CC.

The UE may derive/determine the PL-RS/TPC parameter for a certain BWP/CC on the basis of a list of PL-RSs/list of TPC parameters configured in another BWP/CC.

The certain BWP/CC may be a BWP/CC in which the TCI state is not configured/absent. The another BWP/CC may be a BWP/CC in which the TCI state is configured/present.

In the present disclosure, the BWP/CC in which the TCI state is configured/present may be replaced with the first BWP/CC. In addition, the BWP/CC in which the TCI state is not configured/absent may be replaced with the second BWP/CC.

This will be described with reference to Fig. 9B. For example, the UE may derive/determine the PL-RS/TPC parameter in the second BWP/CC (here, BWP #1 in CC #2) as illustrated in the example of Fig. 9B on the basis of the TCI state list/PL-RS list/TPC parameter list in the first BWP/CC (here, BWP #1 in CC #1).

The list of PL-RSs may include one or more PL-RSs. The PL-RSs included in the list of PL-RSs may be specified by a PL-RS ID/PL-RS set ID.

The list of TPC parameters may include one or more sets of TPC parameters. The set of TPC parameters may be, for example, a set including at least two of P0, $\alpha$, and CL indexes. The set of TPC parameters may be specified by a specific ID (for example, P0-alpha-CL-loop set ID).

Hereinafter, more specific examples of the first embodiment will be described.

<<Embodiment 1-1>>

In the first BWP/CC, each TCI state included in the TCI state list may correspond to/be associated with at least one of the PL-RS and the TPC parameter.

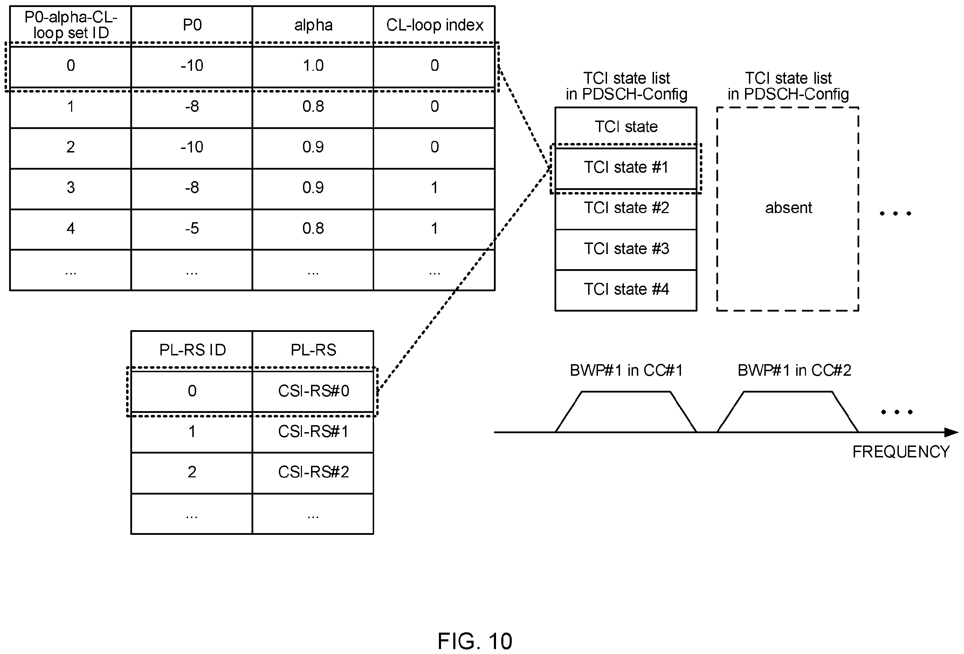

Fig. 10 is a diagram illustrating an example of parameter association according to Embodiment 1-1. In Fig. 10, the TCI state list is configured in BWP #1 in CC #1. In the example illustrated in Fig. 10, it may be considered that the common TCI state list is configured in BWP #1 in CC #1 and BWP #1 in CC #2.

In the example illustrated in Fig. 10, each TCI state included in the TCI state list is associated with a set of TPC parameters (a set including at least two of P0, $\alpha$, and CL indexes) and a PL-RS. Specifically, TCI state #1 of BWP #1 in CC #1, the set of TPC parameters corresponding to P0-alpha-CL-loop set ID #0, and CSI-RS #0 corresponding to PL-RS ID #0 correspond to (are associated with) each other.

For the second BWP/CC, the PL-RS/TPC parameter corresponding to a specific TCI state ID included in the TCI state list in the first BWP/CC may correspond.

For example, for the second BWP/CC, the PL-RS/TPC parameter corresponding to the same TCI state ID included in the TCI state list in the first BWP/CC may correspond.

For example, in the example illustrated in Fig. 10, the PL-RS/TPC parameter corresponding to TCI state #1 in BWP #1 in CC #2 may be derived/determined on the basis of the PL-RS/TPC parameter corresponding to TCI state #1 of BWP #1 in CC #1.

For example, in Fig. 10, the UE may apply the same PL-RS/TPC parameter as the PL-RS/TPC parameter corresponding to TCI state #1 of BWP #1 in CC #1 to TCI state #1 of BWP #1 in CC #2.

In addition, for example, in Fig. 10, the UE may determine the PL-RS/TPC parameter of TCI state #1 of BWP #1 in CC #2 on the basis of a specific rule from the same PL-RS/TPC parameter as the PL-RS/TPC parameter corresponding to TCI state #1 of BWP #1 in CC #1.

The specific rule may be notified/configured to the UE by using higher layer signaling, may be defined in the specifications in advance, or may be based on UE capability information.

Note that, in each embodiment of the present disclosure, the PL-RS (parameter/ID related to the PL-RS) may be included in the TCI state (RRC parameter of the TCI state), or may be associated with the TCI state (RRC parameter of the TCI state) via a specific parameter. In addition, in each embodiment of the present disclosure, the set of parameters (PO/$\alpha$/CL loop index) related to the TPC may be included in the TCI state (RRC parameter of the TCI state), or may be associated with the TCI state (parameter of the TCI state RRC) via a specific parameter.

In addition, in each embodiment of the present disclosure, different TPC parameters may correspond for each type of UL channel/signal (for example, PUCCH/PUSCH/SRS) for each TCI state.

According to Embodiment 1-1, the PL-RS/TPC parameter can be appropriately determined for the BWP/CC in which the TCI state list is not configured.

<<Embodiment 1-2>>

In Embodiment 1-2, determination of the PL-RS in the BWP/CC in which the TCI state list is not particularly configured will be described.

Since the propagation environment may be different for each CC, the PL-RS list preferably configures the RS of the CC to which the TCI state is applied. On the other hand, since CCs in the same band are arranged at the same physical position, the same PL-RS may be used for CCs in the same band.

The UE may determine that the PL-RS corresponding to a specific TCI state ID in the second BWP/CC is the PL-RS corresponding to the same TCI state ID as the specific TCI state ID in the first BWP/CC (Embodiment 1-2-1). In other words, the UE may determine to set the RS of the same BWP/CC (for example, the first BWP/CC) as the PL-RS for the TCI state having the same ID in the plurality of BWPs/CCs (the first BWP/CC and the second BWP/CC).

The PL-RS corresponding to the TCI state in the first BWP/CC may be a specific reference signal (for example, CSI-RS/SSB) in the first BWP/CC.

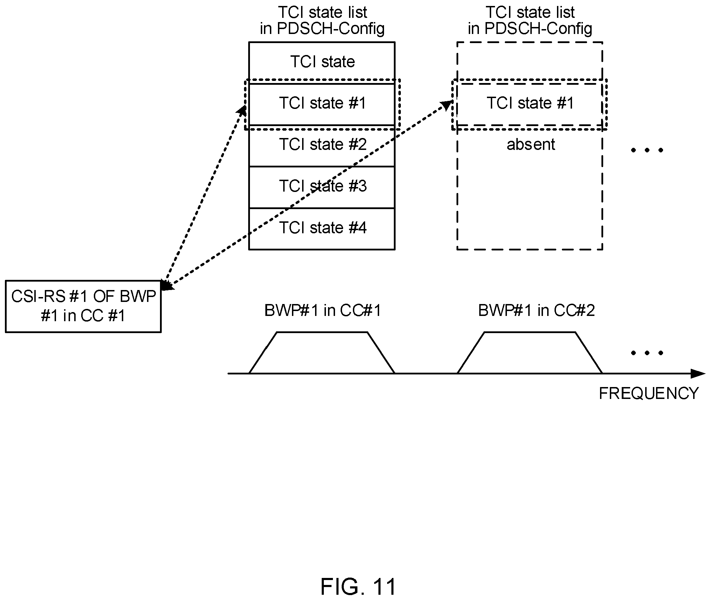

Fig. 11 is a diagram illustrating an example of configuration of PL-RS according to Embodiment 1-2-1. The configuration of the CC/BWP/TCI state list in Fig. 11 is the same as that in Fig. 9B.

In the example illustrated in Fig. 11, the UE may determine that the PL-RS corresponding to TCI state #1 of the second BWP (BWP #1 in CC #2) is the PL-RS (in Fig. 11, CSI-RS #1 of BWP #1 in CC #1) corresponding to TCI state #1 of the first BWP (BWP #1 in CC #1).

For the PL-RS corresponding to the TCI state in the second BWP/CC, the UE may determine the PL-RS in the BWP/CC (for example, BWP/CC in which TCI state list is not configured, BWP/CC for channel/signal to which the TCI state applies) on the basis of the specific rule (Embodiment 1-2-2). In other words, the UE may determine that the RS of each BWP/CC is the PL-RS for the TCI state in each BWP/CC (each of the first BWP/CC and the second BWP/CC).

For example, the UE may determine, in each BWP/CC, that the PL-RS with an ID corresponding to the TCI state ID (for example, CSI-RS/SSB) is a PL-RS corresponding to the TCI state.

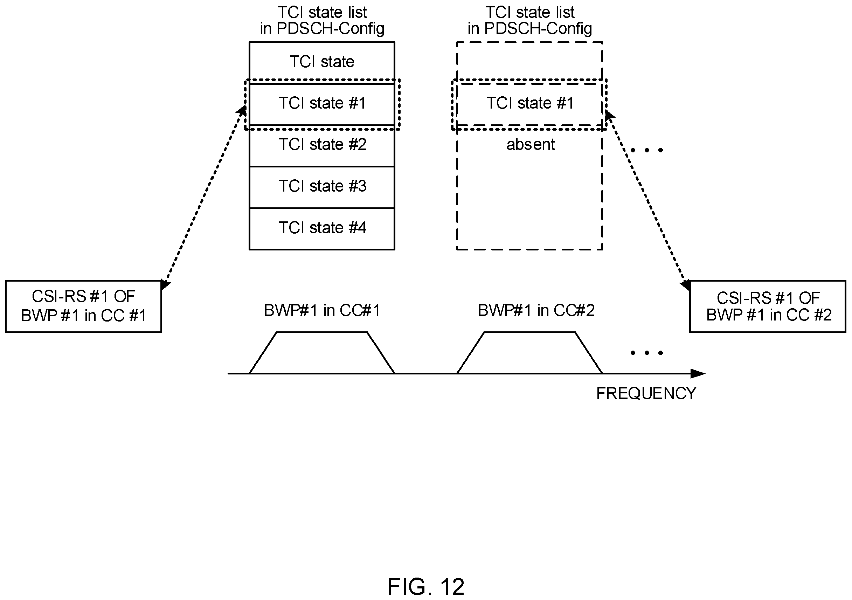

Fig. 12 is a diagram illustrating an example of configuration of PL-RS according to Embodiment 1-2-2. The configuration of the CC/BWP/TCI state list in Fig. 12 is the same as that in Fig. 9B.

In the example illustrated in Fig. 12, the UE may determine that the PL-RS corresponding to TCI state #1 of BWP #1 in CC #1 is CSI-RS #1 of BWP #1 in CC #1. In addition, the UE may determine that the PL-RS corresponding to TCI state #1 of BWP #1 in CC #2 is CSI-RS #1 of BWP #1 in CC #2.

According to Embodiment 1-2, it is possible to determine an appropriate PL-RS corresponding to different propagation environments for each BWP/CC.

<Second Embodiment>

The UE may derive/determine the PL-RS/TPC parameter for a certain BWP/CC on the basis of the TCI state of the certain BWP/CC determined/derived from the TCI state list configured in another BWP/CC.

The UE may derive/determine the PL-RS/TPC parameter for a certain BWP/CC on the basis of the TCI state of the certain BWP/CC determined/derived from the PL-RS list/TPC parameter list configured in another BWP/CC.

The certain BWP/CC may be a BWP/CC in which the TCI state is not configured/absent. The another BWP/CC may be a BWP/CC in which the TCI state is configured/present.

This will be described with reference to Fig. 9B. For example, the UE may derive/determine the TCI state in the second BWP/CC (here, BWP #1 in CC #2) as illustrated in the example of Fig. 9B from the first BWP/CC (here, BWP #1 in CC #1). Next, the UE may derive/determine the PL-RS/TPC parameter of the second BWP/CC on the basis of the derived/determined TCI state.

The UE may determine the PL-RS on the basis of the RS for the QCL configured (included in) in the derived TCI state.

For example, the UE may determine the RS for a specific type of QCL configured (included) in the derived TCI state as the PL-RS.

For example, the RS for the particular type of QCL may be a QCL type D RS. In addition, when the QCL type D RS is not configured, the UE may determine the RS (for example, QCL type A RS) related to another type of QCL as the PL-RS.

For example, in a case where the QCL type D RS is determined as the PL-RS, the PL-RS and the beam of the UL channel/signal can be made the same, and appropriate control of the transmission power can be performed.

Note that the QCL type D RS may be an RS (for example, TRS) of a CC in which the RS is configured or may be an RS (for example, CSI-RS with repetition) of a CC different from the CC in which the RS is configured. For example, when the RS is an RS (for example, CSI-RS with repetition) of a CC different from the CC in which the RS is configured, the UE may determine the PL-RS of the another CC on the basis of the specific rule, similarly to Embodiment 1-2-2.

In addition, the RS for the particular type of QCL may be a QCL type A RS. When determining the QCL type A RS as the PL-RS, the RS of the CC to which the TCI state is applied can be configured as the PL-RS.

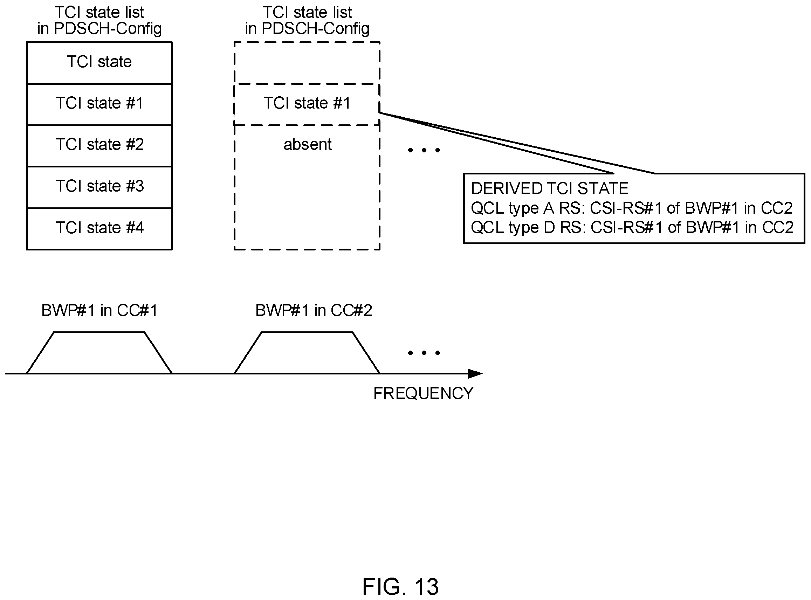

Fig. 13 is a diagram illustrating an example of determination of PL-RS according to the second embodiment. The configuration of the CC/BWP/TCI state list in Fig. 13 is the same as that in Fig. 9B.

In Fig. 13, the UE derives/determines the TCI state in the BWP in which the TCI state list is not configured (BWP #1 in CC #2) on the basis of the TCI state list in the BWP in which the TCI state list is configured (BWP #1 in CC #1).

It is assumed that the derived TCI state (TCI state #1 of BWP #1 in CC #2) includes CSI-RS #1 of BWP #1 in CC #2 as the QCL type A RS and includes CSI-RS #1 of BWP #1 in CC #2 as the QCL type D RS. At this time, the UE may determine the PL-RS corresponding to TCI state #1 of BWP #1 in CC #2 as CSI-RS #1 of BWP #1 in CC #2 derived/determined from TCI state #1.

Note that the second embodiment may be applied only to the BWP/CC in which the TCI state is not configured. In the second embodiment, in the BWP/CC in which the TCI state is not configured, the PL-RS may not be explicitly configured.

According to the second embodiment described above, the PL-RS in the BWP/CC in which the TCI state list is not configured can be appropriately determined using the TCI state derived/determined on the basis of the BWP/CC in which the TCI state list is configured.

<Third Embodiment>

A higher layer parameter (RRC IE)/UE capability corresponding to a function (feature) in at least one of the plurality of embodiments described above may be defined. The UE capability may indicate to support this function.

The UE in which the higher layer parameter corresponding to the function (enabling the function) is configured may perform the function. "The UE in which the higher layer parameter corresponding to the function is not configured does not perform the function (for example, according to Rel. 15/16)" may be defined.

The UE that has reported the UE capability indicating support for the function may perform the function. "The UE that does not report the UE capability indicating support for the function does not perform the function (for example, according to Rel. 15/16)" may be defined.

When the UE reports the UE capability indicating to support the function, and a higher layer parameter corresponding to the function is configured, the UE may perform the function. "When the UE does not report the UE capability indicating to support the function or the higher layer parameter corresponding to the function is not configured, the UE does not perform the function (for example, according to Rel. 15/16)" may be defined.

The UE capability may indicate whether the UE supports this function.

The function may be a unified TCI state framework.

The UE capability may be defined by whether or not to support at least one of the unified TCI state framework, the joint/separate TCI pool, and the joint/separate beam indication. The UE capability may be defined by whether or not at least one of the unified TCI state framework, the joint/separate TCI pool, and the joint/separate beam indication is applicable.

The UE capability may be defined by whether or not to support at least one of the joint TCI, the separate UL only TCI, and the separate DL only TCI. The UE capability may be defined by whether or not at least one of the joint TCI, the separate UL only TCI, and the separate DL only TCI is applicable.

The UE capability may be defined by whether or not to support the unified TCI state framework in CA. The UE capability may be defined by whether or not the unified TCI state framework in CA is applicable.

The UE capability may be defined by whether or not the TCI state list common to a plurality of BWPs/CCs can be configured/applied.

The UE capability may be defined by the number of supported CCs (maximum number) in the unified TCI state framework in CA.

The UE capability may be defined by whether or not to support the determination of PL-RS/TPC parameter in the unified TCI state framework in CA. The UE capability may be defined by whether or not the determination of PL-RS/TPC parameter is possible in the unified TCI state framework in CA.

The UE capability may be defined by whether or not the PL-RS/TPC parameter can be determined when the TCI state list common to a plurality of BWPs/CCs is configured.

The UE capability may be defined by the number of supported CCs (maximum number) when the TCI state list common to a plurality of BWPs/CCs is configured and the PL-RS/TPC parameter is determined.

The UE capability may be defined by whether or not configuration of at least one of the BWP/CC-common TCI state pool/configuration or the BWP/CC-specific TCI state pool/configuration is supported for each band/frequency.

The UE capability may be defined by whether or not to support the UE operation related to the description of each embodiment described above.

The higher layer parameter corresponding to the function (enabling the function) may be a higher layer parameter related to the unified TCI state. The higher layer parameter may be a parameter for configuring at least the unified TCI state (the same TCI state/TCI state ID is commonly applied to multiple DL/UL channels/signals) .

The higher layer parameter corresponding to the function (enabling the function) may be a higher layer parameter related to at least one of the joint TCI, the separate UL only TCI, and the separate DL only TCI.

As described above, according to the third embodiment, the UE can realize the above functions while maintaining compatibility with the existing specifications.

(Radio Communication System)

Hereinafter, a configuration of a radio communication system according to one embodiment of the present disclosure will be described. In this radio communication system, communication is performed using any one of the radio communication methods according to the embodiments of the present disclosure or a combination thereof.

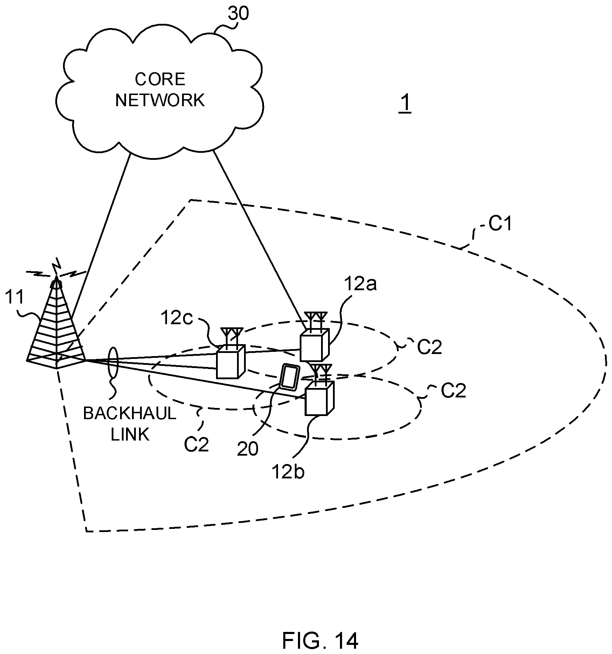

Fig. 14 is a diagram illustrating an example of a schematic configuration of the radio communication system according to one embodiment. A radio communication system 1 may be a system that implements communication using long term evolution (LTE), 5th generation mobile communication system New Radio (5G NR), and the like drafted as the specification by third generation partnership project (3GPP).

In addition, the radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is the MN, and an LTE (E-UTRA) base station (eNB) is the SN.

The radio communication system 1 may support dual connectivity between a plurality of base stations in the same RAT (for example, dual connectivity in which both the MN and the SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as "base stations 10" when the base stations 11 and 12 are not distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a frequency range 1 (FR1) or a second frequency range 2 (FR2). The macro cell C1 may be included in FR1, and the small cell C2 may be included in FR2. For example, FR1 may be a frequency range of 6 GHz or less (sub-6 GHz), and FR2 may be a frequency range higher than 24 GHz (above-24 GHz). Note that the frequency bands, definitions, and the like of the FR1 and FR2 are not limited thereto, and, for example, the FR1 may correspond to a frequency band higher than the FR2.

In addition, the user terminal 20 may perform communication in each CC using at least one of time division duplex (TDD) or frequency division duplex (FDD).

The plurality of base stations 10 may be connected by wire (e.g., an optical fiber or an X2 interface in compliance with common public radio interface (CPRI)) or wirelessly (e.g., NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of an evolved packet core (EPC), a 5G core network (5GCN), or a next generation core (NGC).

The user terminal 20 may a terminal that corresponds to at least one of communication methods such as LTE, LTE-A, and 5G.

In the radio communication system 1, a radio access method based on orthogonal frequency division multiplexing (OFDM) may be used. For example, in at least one of downlink (DL) or uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that in the radio communication system 1, another radio access method (for example, another single carrier transmission method or another multi-carrier transmission method) may be used as the UL and DL radio access method.

In the radio communication system 1, as a downlink channel, a physical downlink shared channel (PDSCH), a physical broadcast channel (PBCH), a physical downlink control channel (PDCCH), or the like shared by the user terminals 20 may be used.

In addition, in the radio communication system 1, as an uplink channel, a physical uplink shared channel (PUSCH), a physical uplink control channel (PUCCH), a physical random access channel (PRACH), or the like shared by the user terminals 20 may be used.

User data, higher layer control information, a system information block (SIB), and the like are transmitted on the PDSCH. The PUSCH may transmit the user data, higher layer control information, and the like. In addition, a master information block (MIB) may be transmitted on the PBCH.

Lower layer control information may be transmitted on the PDCCH. The lower layer control information may include, for example, downlink control information (DCI) including scheduling information of at least one of the PDSCH or the PUSCH.

Note that the DCI that schedules the PDSCH may be referred to as DL assignment, DL DCI, or the like, and the DCI that schedules PUSCH may be referred to as UL grant, UL DCI, or the like. Note that the PDSCH may be replaced with DL data, and the PUSCH may be replaced with UL data.

For detection of the PDCCH, a control resource set (CORESET) and a search space may be used. The CORESET corresponds to a resource that searches for DCI. The search space corresponds to a search area and a search method for PDCCH candidates. One CORESET may be associated with one or more search spaces. The UE may monitor the CORESET associated with a certain search space based on search space configuration.

One search space may correspond to a PDCCH candidate corresponding to one or more aggregation levels. One or more search spaces may be referred to as a search space set. Note that "search space" and "search space set", "search space configuration" and "search space set configuration", and "CORESET" and "CORESET configuration", and the like in the present disclosure may be replaced with each other.

Uplink control information (UCI) including at least one of channel state information (CSI), delivery acknowledgement information (which may be referred to as, for example, hybrid automatic repeat request acknowledgement (HARQ-ACK), ACK/NACK, or the like), or scheduling request (SR) may be transmitted on the PUCCH. A random access preamble for establishing connection with a cell may be transmitted on the PRACH.

Note that in the present disclosure, downlink, uplink, and the like may be expressed without "link". In addition, various channels may be expressed without adding "physical" at the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) or a secondary synchronization signal (SSS). A signal block including the SS (PSS or SSS) and the PBCH (and the DMRS for the PBCH) may be referred to as an SS/PBCH block, an SS block (SSB), or the like. Note that, the SS, the SSB, or the like may also be referred to as a reference signal.

In addition, in the radio communication system 1, a measurement reference signal (sounding reference signal (SRS)), a demodulation reference signal (DMRS), or the like may be transmitted as an uplink reference signal (UL-RS). Note that, DMRSs may be referred to as "user terminal-specific reference signals (UE-specific Reference Signals)."

(Base Station)

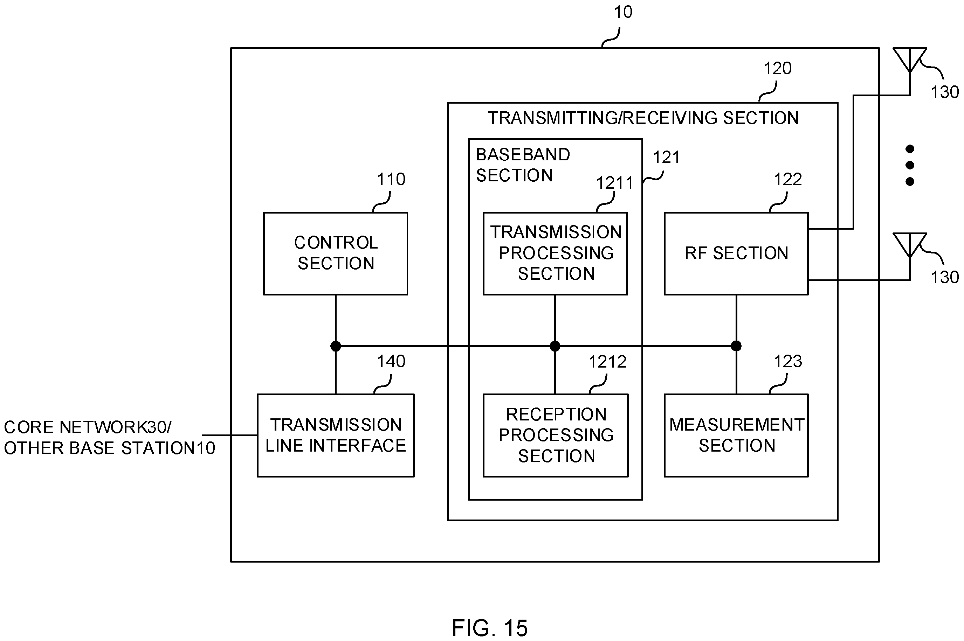

Fig. 15 is a diagram illustrating an example of a configuration of the base station according to one embodiment. The base station 10 includes a control section 110, a transmitting/receiving section 120, a transmitting/receiving antenna 130, and a transmission line interface 140. Note that one or more control sections 110, one or more transmitting/receiving sections 120, one or more transmitting/receiving antennas 130, and one or more transmission line interfaces 140 may be included.

Note that this example mainly describes a functional block which is a characteristic part of the present embodiment, and it may be assumed that the base station 10 also has another functional block necessary for radio communication. A part of processing of each section described below may be omitted.

The control section 110 controls the entire base station 10. The control section 110 can be implemented by a controller, a control circuit, and the like that are described based on common recognition in the technical field related to the present disclosure.

The control section 110 may control signal generation, scheduling (for example, resource allocation or mapping), and the like. The control section 110 may control transmission/reception, measurement, and the like using the transmitting/receiving section 120, the transmitting/receiving antenna 130, and the transmission line interface 140. The control section 110 may generate data to be transmitted as a signal, control information, a sequence, and the like, and may forward the data, the control information, the sequence, and the like to the transmitting/receiving section 120. The control section 110 may perform call processing (such as configuration or releasing) of a communication channel, management of the state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can include a transmitter/receiver, an RF circuit, a baseband circuit, a filter, a phase shifter, a measurement circuit, a transmission/reception circuit, and the like that are described on the basis of common recognition in the technical field related to the present disclosure.

The transmitting/receiving section 120 may be configured as an integrated transmitting/receiving section, or may be configured by a transmitting section and a receiving section. The transmitting section may include the transmission processing section 1211 and the RF section 122. The receiving section may include the reception processing section 1212, the RF section 122, and the measurement section 123.

The transmitting/receiving antennas 130 can be implemented by antennas described based on common recognition in the technical field related to the present disclosure, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmission beam or a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like on, for example, data, control information, and the like acquired from the control section 110, to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog conversion on the bit string to be transmitted, to output a baseband signal.

The transmitting/receiving section 120 (RF section 122) may perform modulation to a radio frequency band, filtering processing, amplification, and the like on the baseband signal, and may transmit a signal in the radio frequency band via the transmitting/receiving antenna 130.

Meanwhile, the transmitting/receiving section 120 (RF section 122) may perform amplification, filtering processing, demodulation to a baseband signal, and the like on the signal in the radio frequency band received by the transmitting/receiving antenna 130.

The transmitting/receiving section 120 (reception processing section 1212) may apply reception processing such as analog-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 120 (measurement section 123) may perform measurement on the received signal. For example, the measurement section 123 may perform radio resource management (RRM), channel state information (CSI) measurement, and the like based on the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. The measurement result may be output to the control section 110.

The transmission line interface 140 may transmit/receive a signal (backhaul signaling) to and from an apparatus included in the core network 30, another base stations 10, and the like, and may acquire, transmit, and the like user data (user plane data), control plane data, and the like for the user terminal 20.

Note that the transmitting section and the receiving section of the base station 10 in the present disclosure may include at least one of the transmitting/receiving section 120, the transmitting/receiving antenna 130, or the transmission line interface 140.

The transmitting/receiving section 120 may transmit first information regarding a list of TCI states including a plurality of TCI states applicable to at least one of a plurality of types of channels and signals, second information including a plurality of sets of a plurality of transmission power control parameters, and third information regarding path loss reference signal candidates. The control section 110 may indicate the transmission power control parameter and the path loss reference signal in a serving cell or a bandwidth part in which the first information is not configured by using the first information, the second information, and the third information. The TCI state included in the first information and the set of transmission power control parameters included in the second information may be associated with each other, and the TCI state included in the first information and the path loss reference signal included in the third information may be associated with each other (First and Second Embodiments).

(User Terminal)

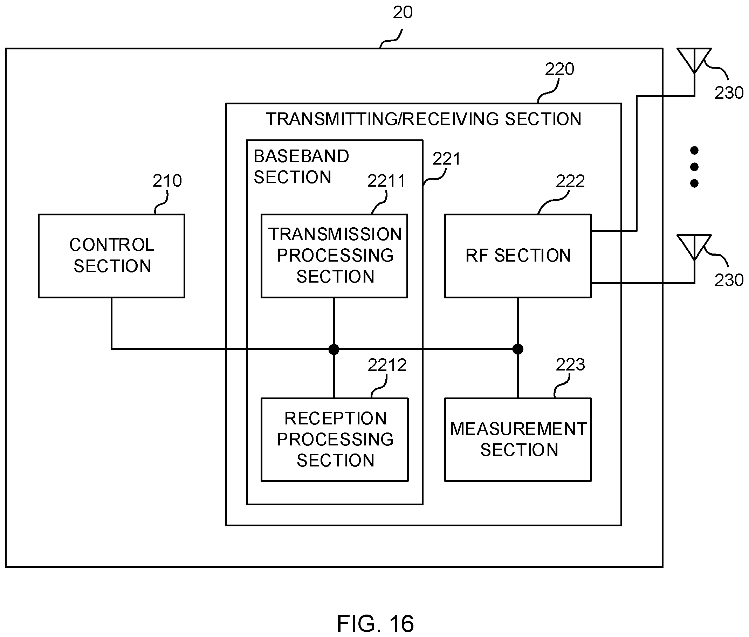

Fig. 16 is a diagram illustrating an example of a configuration of the user terminal according to one embodiment. The user terminal 20 includes a control section 210, a transmitting/receiving section 220, and a transmitting/receiving antenna 230. Note that one or more of the control sections 210, one or more of the transmitting/receiving sections 220, and one or more of the transmitting/receiving antennas 230 may be included.

Note that, although this example mainly describes functional blocks of a characteristic part of the present embodiment, it may be assumed that the user terminal 20 includes other functional blocks that are necessary for radio communication as well. A part of processing of each section described below may be omitted.

The control section 210 controls the entire user terminal 20. The control section 210 can include a controller, a control circuit, and the like that are described on the basis of common recognition in the technical field related to the present disclosure.

The control section 210 may control signal generation, mapping, and the like. The control section 210 may control transmission/reception, measurement, and the like using the transmitting/receiving section 220 and the transmitting/receiving antenna 230. The control section 210 may generate data, control information, a sequence, and the like to be transmitted as signals, and may forward the data, control information, sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be implemented by a transmitter/receiver, an RF circuit, a baseband circuit, a filter, a phase shifter, a measurement circuit, a transmission/reception circuit, and the like that are described based on common recognition in the technical field related to the present disclosure.

The transmitting/receiving section 220 may be formed as an integrated transmitting/receiving section, or may include a transmitting section and a receiving section. The transmitting section may include the transmission processing section 2211 and the RF section 222. The receiving section may include the reception processing section 2212, the RF section 222, and the measurement section 223.

The transmitting/receiving antenna 230 can include an antenna described on the basis of common recognition in the technical field related to the present disclosure, for example, an array antenna.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a transmission beam or a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like on, for example, data, control information, and the like acquired from the control section 210, to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog conversion on the bit string to be transmitted, to output a baseband signal.

Note that whether or not to apply DFT processing may be determined based on configuration of transform precoding. In a case where transform precoding is enabled for a certain channel (e.g., PUSCH), the transmitting/receiving section 220 (transmission processing section 2211) may perform DFT processing as the transmission processing in order to transmit the channel using a DFT-s-OFDM waveform. In a case where it is not the case, DFT processing need not be performed as the transmission processing.

The transmitting/receiving section 220 (RF section 222) may perform modulation to a radio frequency range, filtering processing, amplification, and the like on the baseband signal, to transmit a signal in the radio frequency range via the transmitting/receiving antenna 230.

Meanwhile, the transmitting/receiving section 220 (RF section 222) may perform amplification, filtering processing, demodulation to a baseband signal, and the like on the signal in the radio frequency range received by the transmitting/receiving antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that the transmitting section and the receiving section of the user terminal 20 in the present disclosure may include at least one of the transmitting/receiving section 220, the transmitting/receiving antenna 230, or the transmission line interface 240.

The transmitting/receiving section 220 may receive first information regarding a list of TCI states including a plurality of TCI states applicable to at least one of a plurality of types of channels and signals, second information including a plurality of sets of a plurality of transmission power control parameters, and third information regarding path loss reference signal candidates. The control section 210 may determine the transmission power control parameter and the path loss reference signal in a serving cell or a bandwidth part in which the first information is not configured on the basis of the first information, the second information, and the third information. The TCI state included in the first information and the set of transmission power control parameters included in the second information may be associated with each other, and the TCI state included in the first information and the path loss reference signal included in the third information may be associated with each other (First and Second Embodiments).

The parameter included in the set may be at least two of a parameter regarding a transmission power offset, a parameter regarding a fractional factor, and a parameter regarding a closed loop index (First Embodiment).

The control section 210 may determine the path loss reference signal in a serving cell or a bandwidth part in which the first information is not configured on the basis of the TCI state in a serving cell or a bandwidth part in which the first information is configured (First Embodiment).

The control section 210 may determine the TCI state in a serving cell or a bandwidth part in which the first information is not configured on the basis of the TCI state in a serving cell or a bandwidth part in which the first information is configured. The control section 210 may determine the path loss reference signal in a serving cell or a bandwidth part in which the first information is not configured on the basis of the determined TCI state (Second Embodiment).

(Hardware Configuration)

Note that the block diagrams that have been used to describe the above embodiments illustrate blocks in functional units. These functional blocks (components) may be implemented in arbitrary combinations of at least one of hardware or software. In addition, the method for implementing each functional block is not particularly limited. That is, each functional block may be implemented by a single apparatus physically or logically aggregated, or may be implemented by directly or indirectly connecting two or more physically or logically separate apparatuses (in a wired manner, a radio manner, or the like, for example) and using these apparatuses. The functional block may be realized by combining the one apparatus or the plurality of apparatuses with software.

Here, the function includes, but is not limited to, determining, judging, calculating, computing, processing, deriving, investigating, searching, ascertaining, receiving, transmitting, outputting, accessing, solving, selecting, choosing, establishing, comparing, assuming, expecting, regarding, broadcasting, notifying, communicating, forwarding, configuring, reconfiguring, allocating, mapping, assigning, and the like. For example, a functional block (component) that has a transmission function may be referred to as a transmitting section (transmitting unit), a transmitter, and the like. In any case, as described above, the implementation method is not particularly limited.

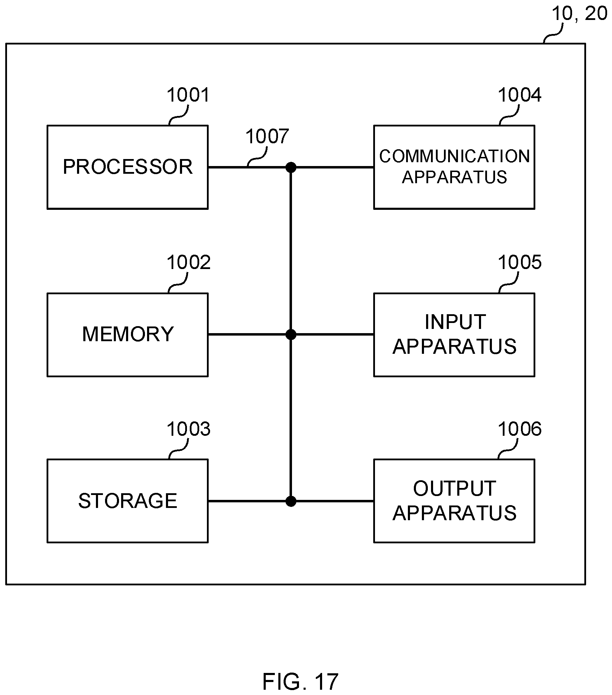

For example, the base station, the user terminal, and the like according to one embodiment of the present disclosure may function as a computer that executes the processing of the radio communication method of the present disclosure. Fig. 17 is a diagram illustrating an example of a hardware configuration of the base station and the user terminal according to one embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, a bus 1007, and the like.

Note that in the present disclosure, the terms such as an apparatus, a circuit, a device, a section, or a unit can be replaced with each other. The hardware configuration of the base station 10 and the user terminal 20 may be designed to include one or more of the apparatuses illustrated in the drawings, or may be designed not to include some apparatuses.

For example, although only one processor 1001 is shown, a plurality of processors may be provided. In addition, the processing may be executed by one processor, or the processing may be executed by two or more processors simultaneously or sequentially, or using other methods. Note that the processor 1001 may be implemented with one or more chips.

Each function of the base station 10 and the user terminal 20 is implemented by predetermined software (program) being read on hardware such as the processor 1001 and the memory 1002, by which the processor 1001 performs operations, controlling communication via the communication apparatus 1004, and controlling at least one of reading or writing of data at the memory 1002 and the storage 1003.

The processor 1001 may control the whole computer by, for example, running an operating system. The processor 1001 may be implemented by a central processing unit (CPU) including an interface with peripheral equipment, a control apparatus, an operation apparatus, a register, and the like. For example, at least a part of the above-described control section 110 (210), transmitting/receiving section 120 (220), and the like may be implemented by the processor 1001.

In addition, the processor 1001 reads programs (program codes), software modules, data, etc. from at least one of the storage 1003 or the communication apparatus 1004 into the memory 1002, and performs various types of processing according to these. As the program, a program that causes a computer to execute at least a part of the operation described in the above-described embodiment is used. For example, the control section 110 (210) may be implemented by control programs that are stored in the memory 1002 and that operate on the processor 1001, and other functional blocks may be implemented likewise.

The memory 1002 is a computer-readable recording medium, and may include, for example, at least one of a read only memory (ROM), an erasable programmable ROM (EPROM), an electrically EPROM (EEPROM), a random access memory (RAM), or other appropriate storage media. The memory 1002 may be referred to as a register, a cache, a main memory (primary storage apparatus), and the like. The memory 1002 can store programs (program codes), software modules, etc. that are executable for implementing the radio communication method according to one embodiment of the present disclosure.

The storage 1003 is a computer-readable recording medium, and may include, for example, at least one of a flexible disk, a floppy (registered trademark) disk, a magneto-optical disk (for example, a compact disc ROM (CD-ROM) and the like), a digital versatile disk, a Blu-ray (registered trademark) disk), a removable disk, a hard disk drive, a smart card, a flash memory device (for example, a card, a stick, or a key drive), a magnetic stripe, a database, a server, or other appropriate storage media. The storage 1003 may be referred to as secondary storage apparatus.

The communication apparatus 1004 is hardware (transmission/reception device) for performing inter-computer communication via at least one of a wired network or a wireless network, and is referred to as, for example, a network device, a network controller, a network card, a communication module, and the like. The communication apparatus 1004 may include a high frequency switch, a duplexer, a filter, a frequency synthesizer, and the like in order to implement, for example, at least one of frequency division duplex (FDD) or time division duplex (TDD). For example, the transmitting/receiving section 120 (220), the transmitting/receiving antenna 130 (230), and the like described above may be implemented by the communication apparatus 1004. The transmitting/receiving section 120 (220) may be implemented by being physically or logically separated into the transmitting section 120a (220a) and the receiving section 120b (220b).

The input apparatus 1005 is an input device for receiving input from the outside (for example, a keyboard, a mouse, a microphone, a switch, a button, a sensor and so on). The output apparatus 1006 is an output device that performs output to the outside (for example, a display, a speaker, a light emitting diode (LED) lamp, or the like). Note that the input apparatus 1005 and the output apparatus 1006 may be provided in an integrated structure (for example, a touch panel).

In addition, these pieces of apparatus, including the processor 1001, the memory 1002 and so on are connected by the bus 1007 so as to communicate information. The bus 1007 may be formed with a single bus, or may be formed with buses that vary between pieces of apparatus.

In addition, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by using the hardware. For example, the processor 1001 may be implemented with at least one of these pieces of hardware.

(Modifications)

Note that terms described in the present disclosure and terms necessary for understanding the present disclosure may be replaced with terms that have the same or similar meanings. For example, a channel, a symbol, and a signal (signal or signaling) may be replaced with each other. In addition, the signal may be a message. The reference signal can be abbreviated as an RS, and may be referred to as a pilot, a pilot signal, and the like, depending on which standard applies. In addition, a component carrier (CC) may be referred to as a cell, a frequency carrier, a carrier frequency, and the like.

A radio frame may be comprised of one or more periods (frames) in the time domain. Each of the one or more periods (frames) included in the radio frame may be referred to as a subframe. Further, the subframe may include one or more slots in the time domain. The subframe may be a fixed time duration (for example, 1 ms) that is not dependent on numerology.

Here, the numerology may be a communication parameter used for at least one of transmission or reception of a certain signal or channel. For example, the numerology may indicate at least one of subcarrier spacing (SCS), a bandwidth, a symbol length, a cyclic prefix length, a transmission time interval (TTI), the number of symbols per TTI, a radio frame configuration, specific filtering processing performed by a transceiver in the frequency domain, or specific windowing processing performed by a transceiver in the time domain.

The slot may include one or more symbols in the time domain (orthogonal frequency division multiplexing (OFDM) symbols, single carrier frequency division multiple access (SC-FDMA) symbols, and the like). In addition, a slot may be a time unit based on numerology.

The slot may include a plurality of mini slots. Each mini slot may include one or more symbols in the time domain. In addition, the mini slot may be referred to as a subslot. Each mini slot may include fewer symbols than the slot. A PDSCH (or PUSCH) transmitted in a time unit larger than the mini slot may be referred to as "PDSCH (PUSCH) mapping type A". A PDSCH (or a PUSCH) transmitted using a mini slot may be referred to as PDSCH (PUSCH) mapping type B.

A radio frame, a subframe, a slot, a minislot and a symbol all represent the time unit in signal communication. The radio frame, the subframe, the slot, the mini slot, and the symbol may be called by other applicable names, respectively. Note that time units such as a frame, a subframe, a slot, a mini slot, and a symbol in the present disclosure may be replaced with each other.

For example, one subframe may be referred to as TTI, a plurality of consecutive subframes may be referred to as TTI, or one slot or one mini slot may be referred to as TTI. That is, at least one of the subframe or the TTI may be a subframe (1 ms) in the existing LTE, may be a period shorter than 1 ms (for example, one to thirteen symbols), or may be a period longer than 1 ms. Note that the unit to represent the TTI may be referred to as a "slot", a "mini slot" and so on, instead of a "subframe."

Here, a TTI refers to the minimum time unit of scheduling in radio communication, for example. For example, in the LTE system, a base station performs scheduling to allocate radio resources (a frequency bandwidth, transmission power, and the like that can be used in each user terminal) to each user terminal in TTI units. Note that the definition of TTIs is not limited to this.

The TTI may be a transmission time unit of a channel-coded data packet (transport block), a code block, a codeword, etc. or may be a processing unit of scheduling, link adaptation, etc. Note that when the TTI is given, a time interval (e.g., the number of symbols) to which a transport block, a code block, a codeword, or the like is actually mapped may be shorter than the TTI.

Note that, when one slot or one minislot is referred to as a "TTI", one or more TTIs (that is, one or multiple slots or one or more minislots) may be the minimum time unit of scheduling. In addition, the number of slots (the number of minislots) to constitute this minimum time unit of scheduling may be controlled.

A TTI having a time duration of 1 ms may be referred to as a usual TTI (TTI in 3GPP Rel. 8 to 12), a normal TTI, a long TTI, a usual subframe, a normal subframe, a long subframe, a slot, or the like. A TTI that is shorter than the usual TTI may be referred to as a shortened TTI, a short TTI, a partial TTI (or fractional TTI), a shortened subframe, a short subframe, a mini slot, a subslot, a slot, or the like.

Note that a long TTI (for example, a normal TTI, a subframe, etc.) may be replaced with a TTI having a time duration exceeding 1 ms, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or more consecutive subcarriers in the frequency domain. The number of subcarriers included in the RB may be the same regardless of the numerology, and may be twelve, for example. The number of subcarriers included in an RB may be determined based on a numerology.

In addition, an RB may include one or more symbols in the time domain, and may be one slot, one minislot, one subframe or one TTI in length. One TTI, one subframe, etc. may each be comprised of one or more resource blocks.

Note that one or more RBs may be referred to as a physical resource block (PRB), a subcarrier group (SCG), a resource element group (REG), a PRB pair, an RB pair, and the like.

In addition, a resource block may include one or more resource elements (REs). For example, one RE may be a radio resource field of one subcarrier and one symbol.

A bandwidth part (BWP) (which may be referred to as a partial bandwidth or the like) may represent a subset of consecutive common resource blocks (RBs) for a certain numerology in a certain carrier. Here, the common RB may be specified by the index of the RB based on a common reference point of the carrier. PRBs may be defined in a BWP and numbered within the BWP.

The BWP may include a BWP for UL (UL BWP) and a BWP for DL (DL BWP). For the UE, one or more BWPs may be configured within one carrier.

At least one of the configured BWPs may be active, and the UE does not have to expect transmission/reception of a predetermined signal/channel outside the active BWP. Note that "cell", "carrier", etc. in the present disclosure may be replaced with "BWP".

Note that the structures of radio frames, subframes, slots, minislots, symbols and so on described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the length of cyclic prefix (CP), and the like can be variously changed.

In addition, the information, parameters, etc. described in the present disclosure may be represented using absolute values, or may be represented using relative values with respect to predetermined values, or may be represented using other corresponding information. For example, a radio resource may be specified by a predetermined index.

The names used for parameters etc. in the present disclosure are in no respect limiting. Further, any mathematical expression or the like that uses these parameters may differ from those explicitly disclosed in the present disclosure. Since various channels (PUCCH, PDCCH, and the like) and information elements can be identified by any suitable names, various names allocated to these various channels and information elements are not restrictive names in any respect.

The information, signals, etc. described in the present disclosure may be represented using any of a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

In addition, information, signals, etc. can be output in at least one of a direction from a higher layer to a lower layer or a direction from a lower layer to a higher layer. Information, signals and so on may be input and output via a plurality of network nodes.

The information, signals and so on that are input and/or output may be stored in a specific location (for example, in a memory), or may be managed in a control table. The information, signals, and the like to be input and output can be overwritten, updated, or appended. The output information, signals, and the like may be deleted. The information, signals and so on that are input may be transmitted to other pieces of apparatus.

Notification of information may be performed not only by using the aspects/embodiments described in the present disclosure but also using another method. For example, the notification of information in the present disclosure may be performed by using physical layer signaling (for example, downlink control information (DCI) or uplink control information (UCI)), higher layer signaling (for example, radio resource control (RRC) signaling, broadcast information (master information block (MIB)), system information block (SIB), or the like), or medium access control (MAC) signaling), another signal, or a combination thereof.

Note that the physical layer signaling may be referred to as Layer 1/Layer 2 (L1/L2) control information (L1/L2 control signal), L1 control information (L1 control signal), and the like. In addition, the RRC signaling may be referred to as an RRC message, and may be, for example, an RRC connection setup message, an RRC connection reconfiguration message, and the like. In addition, notification of the MAC signaling may be performed using, for example, an MAC control element (CE).

In addition, reporting of predetermined information (for example, reporting of information to the effect that "X holds") does not necessarily have to be sent explicitly, and can be sent implicitly (for example, by not reporting this piece of information, by reporting another piece of information, and so on).

Decisions may be made in values represented by one bit (0 or 1), may be made in Boolean values that represent true or false, or may be made by comparing numerical values (for example, comparison against a predetermined value).

Software, whether referred to as "software", "firmware", "middleware", "microcode" or "hardware description language", or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

In addition, software, commands, information and so on may be transmitted and received via communication media. For example, when software is transmitted from a website, a server, or another remote source by using at least one of a wired technology (coaxial cable, optical fiber cable, twisted pair, digital subscriber line (DSL), or the like) or a wireless technology (infrared rays, microwaves, and the like), at least one of the wired technology or the wireless technology is included within the definition of a transmission medium.

The terms "system" and "network" used in the present disclosure may be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" can be used interchangeably.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or more (for example, three) cells. In a case where the base station accommodates a plurality of cells, the entire coverage area of the base station can be partitioned into a plurality of smaller areas, and each smaller area can provide communication services through a base station subsystem (for example, small base station for indoors (remote radio head (RRH))). The term "cell" or "sector" refers to a part or the whole of a coverage area of at least one of the base station or the base station subsystem that performs a communication service in this coverage.

In the present disclosure, the terms such as "mobile station (MS)", "user terminal", "user equipment (UE)", and "terminal" can be used interchangeably.

The mobile station may be referred to as a subscriber station, mobile unit, subscriber station, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

At least one of the base station or the mobile station may be called as a transmitting apparatus, a receiving apparatus, a wireless communication apparatus, and the like. Note that at least one of the base station or the mobile station may be a device mounted on a moving body, a moving body itself, and the like. The moving body may be a transportation (for example, a car, an airplane, or the like), an unmanned moving body (for example, a drone, an autonomous car, or the like), or a (manned or unmanned) robot. Note that at least one of the base station or the mobile station also includes an apparatus that does not necessarily move during a communication operation. For example, at least one of the base station or the mobile station may be an Internet of Things (IoT) device such as a sensor.

In addition, the base station in the present disclosure may be replaced with the user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In this case, the user terminal 20 may have the function of the above-described base station 10. In addition, terms such as "uplink" and "downlink" may be replaced with words corresponding to terminal-to-terminal communication (for example, "sidelink"). For example, an uplink channel, a downlink channel, and the like may be replaced with a sidelink channel.

Similarly, the user terminal in the present disclosure may be replaced with the base station. In this case, the base station 10 may have the functions of the user terminal 20 described above.

In the present disclosure, an operation performed by the base station may be performed by an upper node thereof in some cases. In a network including one or more network nodes with base stations, it is clear that various operations performed for communication with a terminal can be performed by a base station, one or more network nodes (examples of which include but are not limited to mobility management entity (MME) and serving-gateway (S-GW)) other than the base station, or a combination thereof.

The aspects/embodiments illustrated in the present disclosure may be used individually or in combinations, which may be switched depending on the mode of implementation. In addition, the order of processing procedures, sequences, flowcharts, and the like of the aspects/embodiments described in the present disclosure may be reordered as long as there is no inconsistency. For example, the methods described in the present disclosure have presented various step elements using an exemplary order, and are not limited to the presented specific order.

Each aspect/embodiment described in the present disclosure may be applied to a system using long term evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (x is, for example, an integer or decimal)), future radio access (FRA), new radio access technology (RAT), new radio (NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded on the basis of these, and the like. In addition, a plurality of systems may be combined and applied (for example, a combination of LTE or LTE-A and 5G, and the like).

The phrase "based on" as used in the present disclosure does not mean "based only on", unless otherwise specified. In other words, the phrase "based on" means both "based only on" and "based at least on."

All references to the elements using designations such as "first" and "second" as used in the present disclosure do not generally limit the amount or sequence of these elements. These designations can be used in the present disclosure, as a convenient way of distinguishing between two or more elements. In this way, reference to the first and second elements does not imply that only two elements may be employed, or that the first element must precede the second element in some way.

The term "determining" as used in the present disclosure may include a wide variety of operations. For example, "determining" may be regarded as "determining" judging, calculating, computing, processing, deriving, investigating, looking up (or searching or inquiring) (for example, looking up in a table, database, or another data structure), ascertaining, and the like.

In addition, to "judge" and "determine" as used herein may be interpreted to mean making judgements and determinations related to receiving (for example, receiving information), transmitting (for example, transmitting information), inputting, outputting, accessing (for example, accessing data in a memory) and so on.

In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

In addition, "determining" may be replaced with "assuming", "expecting", "considering", or the like.

The "maximum transmission power" described in the present disclosure may mean a maximum value of transmission power, nominal UE maximum transmit power, or rated UE maximum transmit power.

The terms "connected" and "coupled" used in the present disclosure, or any variation of these terms mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be replaced with "access".

In the present disclosure, when two elements are connected together, it is conceivable that the two elements are "connected" or "coupled" to each other by using one or more electrical wires, cables, printed electrical connections, and the like, and, as some non-limiting and non-inclusive examples, by using electromagnetic energy having wavelengths in the radio frequency domain, microwave region, or optical (both visible and invisible) region, or the like.

In the present disclosure, the terms "A and B are different" may mean "A and B are different from each other". Note that the phrase may mean that "A and B are different from C". The terms such as "separate", "coupled", and the like may be interpreted similarly to "different".

When "include", "including", and variations of these are used in the present disclosure, these terms are intended to be inclusive similarly to the term "comprising". Moreover, the term "or" used in the present disclosure is intended to be not an exclusive-OR.

In the present disclosure, when articles are added by translation, for example, as "a", "an", and "the" in English, the present disclosure may include that nouns that follow these articles are plural.

In the above, the invention according to the present disclosure has been described in detail; however, it is obvious to those skilled in the art that the invention according to the present disclosure is not limited to the embodiments described in the present disclosure. The invention according to the present disclosure can be embodied with various corrections and in various modified aspects, without departing from the spirit and scope of the invention defined on the basis of the description of claims. Consequently, the description of the present disclosure is provided only for the purpose of explaining examples, and should by no means be construed to limit the invention according to the present disclosure in any way.

This application is based on Japanese Patent Application No. 2021-132997 filed on August 17, 2021. The contents of this are all incorporated herein.

**Claims**

1. A terminal comprising:

a receiving section that receives first information regarding a list of transmission configuration indication (TCI) states including a plurality of TCI states applicable to at least one of a plurality of types of channels and signals, second information including a plurality of sets of a plurality of transmission power control parameters, and third information regarding path loss reference signal candidates; and
a control section that determines a transmission power control parameter and a path loss reference signal in a serving cell or a bandwidth part in which the first information is not configured on a basis of the first information, the second information, and the third information, wherein
the TCI state included in the first information and the set of transmission power control parameters included in the second information are associated with each other, and the TCI state included in the first information and the path loss reference signal included in the third information are associated with each other.

2. The terminal according to claim 1, wherein the parameter included in the set is at least two of a parameter regarding a transmission power offset, a parameter regarding a fractional factor, and a parameter regarding a closed loop index.

3. The terminal according to claim 1, wherein the control section determines the path loss reference signal in a serving cell or a bandwidth part in which the first information is not configured on a basis of the TCI state in a serving cell or a bandwidth part in which the first information is configured.

4. The terminal according to claim 1, wherein the control section determines the TCI state in a serving cell or a bandwidth part in which the first information is not configured on a basis of the TCI state in a serving cell or a bandwidth part in which the first information is configured, and determines the path loss reference signal in a serving cell or a bandwidth part in which the first information is not configured on a basis of the determined TCI state.

5. A radio communication method of a terminal, the method comprising:

receiving first information regarding a list of transmission configuration indication (TCI) states including a plurality of TCI states applicable to at least one of a plurality of types of channels and signals, second information including a plurality of sets of a plurality of transmission power control parameters, and third information regarding path loss reference signal candidates; and
determining a transmission power control parameter and a path loss reference signal in a serving cell or a bandwidth part in which the first information is not configured on a basis of the first information, the second information, and the third information, wherein
the TCI state included in the first information and the set of transmission power control parameters included in the second information are associated with each other, and the TCI state included in the first information and the path loss reference signal included in the third information are associated with each other.

6. A base station comprising:

a transmitting section that transmits first information regarding a list of transmission configuration indication (TCI) states including a plurality of TCI states applicable to at least one of a plurality of types of channels and signals, second information including a plurality of sets of a plurality of transmission power control parameters, and third information regarding path loss reference signal candidates; and
a control section that indicates a transmission power control parameter and a path loss reference signal in a serving cell or a bandwidth part in which the first information is not configured by using the first information, the second information, and the third information, wherein
the TCI state included in the first information and the set of transmission power control parameters included in the second information are associated with each other, and the TCI state included in the first information and the path loss reference signal included in the third information are associated with each other.

```
PUSCH-PowerControl ::=          SEQUENCE {
    ...
    p0-AlphaSets                SEQUENCE (SIZE (1..maxNrofP0-PUSCH-AlphaSets)) OF P0-PUSCH-AlphaSet    OPTIONAL, -- Need M
    ...
    twoPUSCH-PC-AdjustmentStates    ENUMERATED {twoStates}                          OPTIONAL, -- Need S
    ...
    sri-PUSCH-MappingToAddModList    SEQUENCE (SIZE (1..maxNrofSRI-PUSCH-Mappings)) OF SRI-PUSCH-PowerControl
                                                    OPTIONAL, -- Need N
    sri-PUSCH-MappingToReleaseList    SEQUENCE (SIZE (1..maxNrofSRI-PUSCH-Mappings)) OF SRI-PUSCH-PowerControlId
                                                    OPTIONAL -- Need N
}

P0-PUSCH-AlphaSet ::=           SEQUENCE {
    p0-PUSCH-AlphaSetId         P0-PUSCH-AlphaSetId,
    p0                      INTEGER (-16..15)                       OPTIONAL, -- Need S
    alpha                   Alpha                           OPTIONAL -- Need S
}

P0-PUSCH-AlphaSetId ::=         INTEGER (0..maxNrofP0-PUSCH-AlphaSets-1)

SRI-PUSCH-PowerControl ::=      SEQUENCE {
    sri-PUSCH-PowerControlId        SRI-PUSCH-PowerControlId,
    sri-PUSCH-PathlossReferenceRS-Id    PUSCH-PathlossReferenceRS-Id,
    sri-P0-PUSCH-AlphaSetId         P0-PUSCH-AlphaSetId,
    sri-PUSCH-ClosedLoopIndex       ENUMERATED { i0, i1 }
}
```

FIG. 1

```
PUSCH-PowerControl-v1610 ::=        SEQUENCE {
  ...
  p0-PUSCH-SetList-r16          SEQUENCE (SIZE (1..maxNrofSRI-PUSCH-Mappings)) OF P0-PUSCH-Set-r16     OPTIONAL, -- Need R
  olpc-ParameterSet             SEQUENCE {
    olpc-ParameterSetDCI-0-1-r16        INTEGER (1..2)                          OPTIONAL, -- Need R
    olpc-ParameterSetDCI-0-2-r16        INTEGER (1..2)                          OPTIONAL  -- Need R
  }                                                             OPTIONAL, -- Need M
  ...
}

P0-PUSCH-Set-r16 ::=           SEQUENCE {
  p0-PUSCH-SetId-r16              P0-PUSCH-SetId-r16,
  p0-List-r16                    SEQUENCE (SIZE (1..maxNrofP0-PUSCH-Set-r16)) OF P0-PUSCH-r16          OPTIONAL, -- Need R
  ...
}

P0-PUSCH-SetId-r16 ::=         INTEGER (0..maxNrofSRI-PUSCH-Mappings-1)

P0-PUSCH-r16 ::=              INTEGER (-16..15)
```

FIG. 2

EP 4 391 623 A1

```
PUCCH-PowerControl ::=          SEQUENCE {
   ...
   p0-Set                    SEQUENCE (SIZE (1..maxNrofPUCCH-P0-PerSet)) OF P0-PUCCH        OPTIONAL, -- Need M
   ...
   twoPUCCH-PC-AdjustmentStates    ENUMERATED {twoStates}                                  OPTIONAL, -- Need S
   ...,
   ...
}

P0-PUCCH ::=              SEQUENCE {
   p0-PUCCH-Id               P0-PUCCH-Id,
   p0-PUCCH-Value            INTEGER (-16..15)
}

P0-PUCCH-Id ::=              INTEGER (1..8)

PUCCH-SpatialRelationInfo ::=       SEQUENCE {
   pucch-SpatialRelationInfoId    PUCCH-SpatialRelationInfoId,
   ...
   },
   pucch-PathlossReferenceRS-Id      PUCCH-PathlossReferenceRS-Id,
   p0-PUCCH-Id               P0-PUCCH-Id,
   closedLoopIndex           ENUMERATED { i0, i1 }
}
```

FIG. 3

```
SRS-ResourceSet ::=            SEQUENCE {
    ...
    },
    ...
    alpha                    Alpha                              OPTIONAL, -- Need S
    p0                      INTEGER (-202..24)                  OPTIONAL, -- Cond Setup
    pathlossReferenceRS      PathlossReferenceRS-Config            OPTIONAL, -- Need M
    ...
    ]]
}
```

FIG. 4

EP 4 391 623 A1

EP 4 391 623 A1

| TCI STATE LIST CONFIGURED IN CC #0 | TCI STATE LIST CONFIGURED IN CC #1 | TCI STATE LIST CONFIGURED IN CC #2 | TCI STATE LIST CONFIGURED IN CC #3 |
|---|---|---|---|
| TCI-state#0 | TCI-state#0 | TCI-state#0 | TCI-state#0 |
| TCI-state#1 | TCI-state#1 | TCI-state#1 | TCI-state#1 |
| TCI-state#2 | TCI-state#2 | TCI-state#2 | TCI-state#2 |
| ... | ... | ... | ... |
| TCI-state#63 | TCI-state#63 | TCI-state#63 | TCI-state#63 |

ACTIVATED BY MAC CE

ACTIVATED AUTOMATICALLY

CC#0            CC#1            CC#2            CC#3

APPLICABLE CC LIST = {CC#0, CC#1, CC#2, CC#3}

FIG. 5

FIG. 6A

configuration
for DL&UL
(RRC)

activation
for DL&UL
(MAC CE)

SSB/
CSI-RS/
SRS

active TCI pool for DL&UL

joint indication

indication
for DL&UL
(DCI)

one or
subset of
all DL&UL

FIG. 6B

configuration
for DL&UL
(RRC)

activation
for DL/UL
(MAC CE)

SSB/
CSI-RS/
SRS

active TCI pool for
DL&UL, or
separate active TCI pools
for DL&UL

separate indication

indication
for DL
(DCI)

one or
subset of
all DL

indication
for UL
(DCI)

one or
subset of
all UL

FIG. 7

FIG. 8

EP 4 391 623 A1

FIG. 9A

TCI state list
in PDSCH-Config

| TCI state |
|---|
| TCI state #1 |
| TCI state #2 |
| TCI state #3 |
| TCI state #4 |

TCI state list
in PDSCH-Config

| TCI state |
|---|
| TCI state #1 |
| TCI state #2 |
| TCI state #3 |
| TCI state #4 |

· · ·

BWP#1 in CC#1

BWP#1 in CC#2

· · ·

FREQUENCY

FIG. 9B

TCI state list
in PDSCH-Config

| TCI state |
|---|
| TCI state #1 |
| TCI state #2 |
| TCI state #3 |
| TCI state #4 |

TCI state list
in PDSCH-Config

| absent |
|---|

· · ·

BWP#1 in CC#1

BWP#1 in CC#2

· · ·

FREQUENCY

| P0-alpha-CL-loop set ID | P0 | alpha | CL-loop index |
|---|---|---|---|
| 0 | -10 | 1.0 | 0 |
| 1 | -8 | 0.8 | 0 |
| 2 | -10 | 0.9 | 0 |
| 3 | -8 | 0.9 | 1 |
| 4 | -5 | 0.8 | 1 |
| ... | ... | ... | ... |

| PL-RS ID | PL-RS |
|---|---|
| 0 | CSI-RS#0 |
| 1 | CSI-RS#1 |
| 2 | CSI-RS#2 |
| ... | ... |

TCI state list in PDSCH-Config

| TCI state |
|---|
| TCI state #1 |
| TCI state #2 |
| TCI state #3 |
| TCI state #4 |

TCI state list in PDSCH-Config

absent

. . .

BWP#1 in CC#1          BWP#1 in CC#2

. . .

FREQUENCY

FIG. 10

TCI state list
in PDSCH-Config

| TCI state |
| --- |
| TCI state #1 |
| TCI state #2 |
| TCI state #3 |
| TCI state #4 |

TCI state list
in PDSCH-Config

| TCI state #1 |
| --- |
| absent |

· · ·

CSI-RS #1 OF BWP
#1 in CC #1

BWP#1 in CC#1          BWP#1 in CC#2          · · ·

FREQUENCY

FIG. 11

EP 4 391 623 A1

TCI state list
in PDSCH-Config

| TCI state |
| --- |
| TCI state #1 |
| TCI state #2 |
| TCI state #3 |
| TCI state #4 |

TCI state list
in PDSCH-Config

| TCI state #1 |
| --- |
| absent |

· · ·

CSI-RS #1 OF
BWP #1 in CC #1

BWP#1 in CC#1

BWP#1 in CC#2

CSI-RS #1 OF
BWP #1 in CC #2

· · ·

FREQUENCY

FIG. 12

FIG. 13

FIG. 14

FIG. 15

FIG. 16

EP 4 391 623 A1

10, 20

FIG. 17

<div style="text-align:center">**INTERNATIONAL SEARCH REPORT**</div>

| International application No. |
| --- |
| **PCT/JP2022/030939** |

**A. CLASSIFICATION OF SUBJECT MATTER**

*H04W 16/28*(2009.01)i; *H04L 27/26*(2006.01)i; *H04W 76/15*(2018.01)i; *H04W 52/18*(2009.01)i
FI: H04W16/28; H04L27/26 320; H04W52/18; H04W76/15

According to International Patent Classification (IPC) or to both national classification and IPC

**B. FIELDS SEARCHED**

Minimum documentation searched (classification system followed by classification symbols)

H04W4/00-99/00; H04B7/24-7/26; H04L27/26

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | ERICSSON. Enhancements on Multi-beam Operation[online]. 3GPP TSG RAN WG1 #106-e R1-2108231. Internet<URL:https://www.3gpp.org/ftp/tsg_ran/WG1_RL1/TSGR1_106-e/Docs/R1-2108231.zip>. 13 August 2021<br>section 2 | 1–6 |
| A | NTT DOCOMO, INC. Discussion on multi-beam operation[online]. 3GPP TSG RAN WG1 #106-e R1-2107838. Internet<URL:https://www.3gpp.org/ftp/tsg_ran/WG1_RL1/TSGR1_106-e/Docs/R1-2107838.zip>. 06 August 2021<br>section 2 | 1-6 |

☐ Further documents are listed in the continuation of Box C.　☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **11 November 2022** | **22 November 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021132997 A

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0,* April 2010